# EUROPEAN PATENT APPLICATION

(11) **EP 2 023 546 A2**
(43) Date of publication of application: **11.02.2009**
(21) Application number: 08152697.2
(22) Date of filing: 13.03.2008
(51) Int. Cl.: H04L 12/46

(54) **Electronic device system, electronic device, and processing method**

(30) Priority: 14.03.2007 JP 2007065653
(71) Applicant: Sony Corporation, Tokyo 108-0075 (JP)
(72) Inventor: Yamazaki, Tatsuya, Tokyo 108-0075 (JP)
(74) Representative: Melzer, Wolfgang

(57) **Abstract**

The present invention provides an electronic device system which combines the mutual functions without employing the mutual relationship of the master and slave, and which is high in convenience for the user. The vehicle AV device according to an embodiment of the present invention has a PIN cable which performs mutual communication with a PND through a wire or wirelessly, and a control microcomputer which recognizes a command sent from the PND through the PIN cable, and which performs the processing of the PND instead using the function of itself in accordance with the recognized command.

## Description

### CROSS REFERENCES TO RELATED APPLICATIONS

The present invention contains subject matter related to Japanese Patent Application JP2007-065653 filed in the Japanese Patent Office on March 14, 2007, the entire contents of which being incorporated herein by reference.

### BACKGROUND OF THE INVENTION

### FIELD OF THE INVENTION

This invention relates to an electronic device system, an electronic device, and a processing method which are desirably applied to an electronic device system configured by connecting, for example, a vehicle audio video device (referred to as vehicle AV device, hereinafter) and a portable navigation device (referred to as PND, hereinafter).

### DESCRIPTION OF THE RELATED ART

As a method to make a vehicle AV device and a PND, which is a cellular phone provided with the navigation function, cooperate with each other, it is general that the navigation operation of the PND is specialized to be performed in the vehicle AV device.

Furthermore, as a method to connect a vehicle AV device and a PND, there are employed only a method of mechanically coupling the PND to a cradle mounted on the vehicle AV device, or a method of providing the vehicle AV device itself with a space to take in the PND, and mechanically coupling the PND therein.

In this case, when the vehicle AV device and PND are connected, the vehicle AV device functions as a master, and the PND functions as a slave, and the navigation operation of the PND is performed from the vehicle AV device.

Being different from the method to connect a vehicle AV device and a PND, there are employed a system in which contents retained by a portable device are transferred to another portable device, and the contents are mutually shared (for example, refer to PCT Patent Application Laid-Open No. 2006-518507), or a remote control which specifies a device to be controlled using a response from plural controllable devices on a network, and displays the result employing the GUI (for example, refer to Jpn. Pat. Appln. Laid-Open Publication No. 2006-345479).

### SUMMARY OF THE INVENTION

As described above, when a vehicle AV device and a PND are connected, the vehicle AV device functions as a master, and the PND functions as a slave so that the vehicle AV device performs only the navigation operation of the PND. Thus, the functions of both the vehicle AV device and PND are not able to be effectively utilized to improve the convenience. Further, it is necessary to concurrently purchase the vehicle AV device and PND so as to make them function.

In view of the above-identified circumstances, it is therefore desirable to provide an electronic device system, an electronic device, and a processing method which do not employ the mutual relationship of the master and slave, but combine the mutual functions, which are high in convenience for the user.

According to an embodiment of the present invention, there is provided an electronic device system including a first electronic device and a second electronic device which are independent from each other, and which are connected through a wire or wirelessly, wherein the first electronic device includes: a first communication means for performing mutual communication with the second electronic device; a first recognition means for recognizing a command sent from the second electronic device through the first communication means; and a first processing means for performing the processing of the second electronic device instead using the function of the first electronic device in accordance with the command recognized by the first recognition means, and the second electronic device includes: a second communication means for performing mutual communication with the first electronic device; a second recognition means for recognizing a command sent from the first electronic device through the second communication means; and a second processing means for performing the processing of the first electronic device instead using the function of the second electronic device in accordance with the command recognized by the second recognition means.

Accordingly, the first electronic device and the second electronic device communicate with each other mutually, recognize a command sent from the other device, and can perform the processing of the other device instead using the function of itself in accordance with the command. Thus, a user interface which combines the mutual functions without employing the mutual relationship of the master and slave can be realized to improve the operability significantly.

According to an embodiment of the present invention, there is also provided an electronic device and processing method including: a communication means for performing mutual communication with one other device through a wire or wirelessly; a recognition means for recognizing a command sent from the other device through the communication means; and a processing means for performing the processing of the other device instead using the function of itself in accordance with the command recognized by the recognition means.

Accordingly, the electronic device communicates with the other device mutually, recognizes the command sent from the other device, and can perform the processing of the other device instead using the function of itself in accordance with the command. Thus, a user interface which combines the function of the other device without employing the mutual relationship of the master and slave can be realized to improve the operability significantly.

According to the present invention, the first electronic device and the second electronic device communicate with each other mutually, recognize a command sent from the other device, and can perform the processing of the other device instead mutually using the function of itself in accordance with the command. Thus, a user interface which combines the mutual functions without employing the mutual relationship of the master and slave can be realized to improve the operability significantly. Accordingly, it is possible to realize an electronic device system which combines the mutual functions without employing the mutual relationship of the master and slave, and which is high in convenience for the user.

Furthermore, according to the present invention, the electronic device communicates with the other device mutually, recognizes a command sent from the other device, and can perform the processing of the other device instead using the function of itself in accordance with the command. Thus, a user interface which combines the function of the other device without employing the mutual relationship of the master and slave can be realized to improve the operability significantly. Accordingly, it is possible to realize an electronic device and a processing method which combine the function of the other device without employing the mutual relationship of the master and slave, and which are high in convenience for the user.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
FIG. 1 shows a schematic view indicative of the entire configuration of an electronic device system in the first embodiment;
FIG. 2 shows a perspective view indicative of the exterior configuration of a vehicle AV device;
FIG. 3 shows a block diagram indicative of the circuit configuration of the electronic device system in the first embodiment;
FIG. 4 shows a sequence chart indicative of the hands-free processing procedure (1) of the electronic device system in the first embodiment;
FIG. 5 shows a sequence chart indicative of the hands-free processing procedure (2) of the electronic device system in the first embodiment;
FIG. 6 shows a schematic view indicative of the entire configuration of an electronic device system in the second embodiment;
FIG. 7 shows a block diagram indicative of the circuit configuration of the electronic device system in the second embodiment;
FIG. 8 shows a sequence chart indicative of the sound extension processing procedure (1) of the electronic device system in the second embodiment;
FIG. 9 shows a sequence chart indicative of the sound extension processing procedure (2) of the electronic device system in the second embodiment;
FIG. 10 shows a schematic view indicative of the entire configuration of an electronic device system in the third embodiment;
FIG. 11 shows a block diagram indicative of the circuit configuration of the electronic device system in the third embodiment;
FIG. 12 shows a sequence chart indicative of the streaming reproduction processing procedure (1) of the electronic device system in the third embodiment;
FIG. 13 shows a sequence chart indicative of the streaming reproduction processing procedure (2) of the electronic device system in the third embodiment;
FIG. 14 shows a schematic view indicative of the entire configuration of an electronic device system in the fourth embodiment;
FIG. 15 shows a block diagram indicative of the circuit configuration of the electronic device system in the fourth embodiment;
FIG. 16 shows a sequence chart indicative of the navigation sound extension processing procedure (1) of the electronic device system in the fourth embodiment;
FIG. 17 shows a sequence chart indicative of the navigation sound extension processing procedure (2) of the electronic device system in the fourth embodiment;
FIG. 18 shows a schematic view indicative of the entire configuration of an electronic device system in the fifth embodiment;
FIG. 19 shows a block diagram indicative of the circuit configuration of the electronic device system in the fifth embodiment;
FIG. 20 shows a sequence chart indicative of the vehicle AV contents image display processing procedure of the electronic device system in the fifth embodiment;
FIG. 21 shows a schematic view indicative of the entire configuration of an electronic device system in the sixth embodiment;
FIG. 22 shows a block diagram indicative of the circuit configuration of the electronic device system in the sixth embodiment;
FIGS. 23A and 23B show a sequence chart indicative of the image and sound output processing procedure by a portable AV player of the electronic device system in the sixth embodiment; and
FIG. 24 shows a schematic view indicative of the entire configuration of an electronic device system in another embodiment.

### DETAILED DESCRIPTION OF THE PREFERRED EMBODIMENTS

Now, embodiments of the present invention will be described in greater detail by referring to the accompanying drawings.

### (1) First Embodiment

### (1-1) Overall configuration of electronic device system in first embodiment

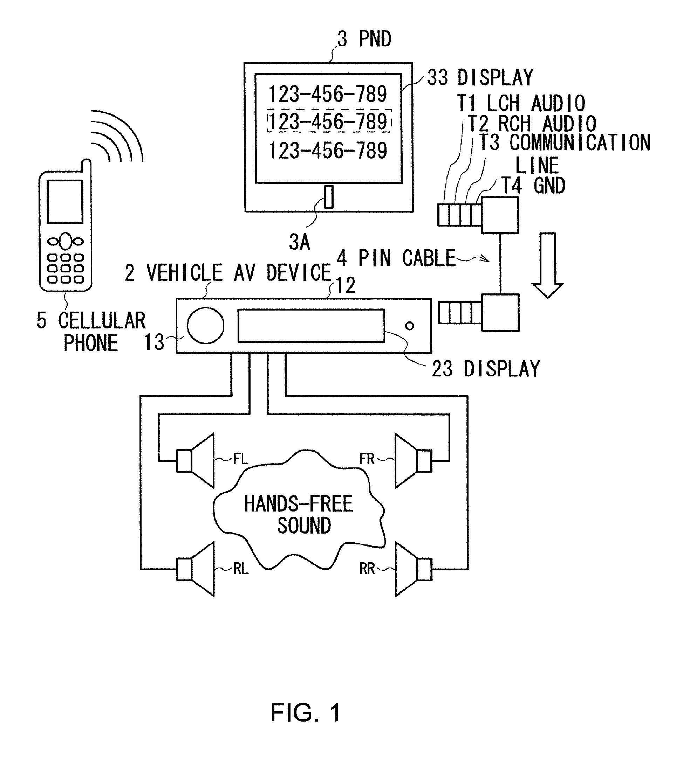

In FIG. 1, a reference numeral "1" represents an electronic device system in the first embodiment. To a vehicle AV device 2 which is arranged in a space inside a vehicle, a PND 3 is mutually connected through a tetrapolar mini PIN cable (referred to as tetrapolar PIN cable, hereinafter) 4. To the PND 3, a cellular phone 5 is wirelessly connected by a wireless communication such as Bluetooth.

The PIN cable 4 has a left channel audio terminal T1, a right channel audio terminal T2, a communication line terminal T3, and a ground terminal T4, and, through the communication line terminal T3, various commands and status signals are sent and received between the vehicle AV device 2 and the PND 3, and, through the left channel audio terminal T1 and right channel audio terminal T2, left channel sound data and right channel sound data (both of which are combinedly referred to as sound data, hereinafter) supplied from the PND 3 are transmitted to the vehicle AV device 2.

When mounted to a vehicle (not shown), due to the spatial restriction inside the vehicle, the vehicle AV device 2 has its most part of a main body 12 thereof built in the dashboard, and is attached such that only a front panel 13 thereof is exposed to the outside of the dashboard.

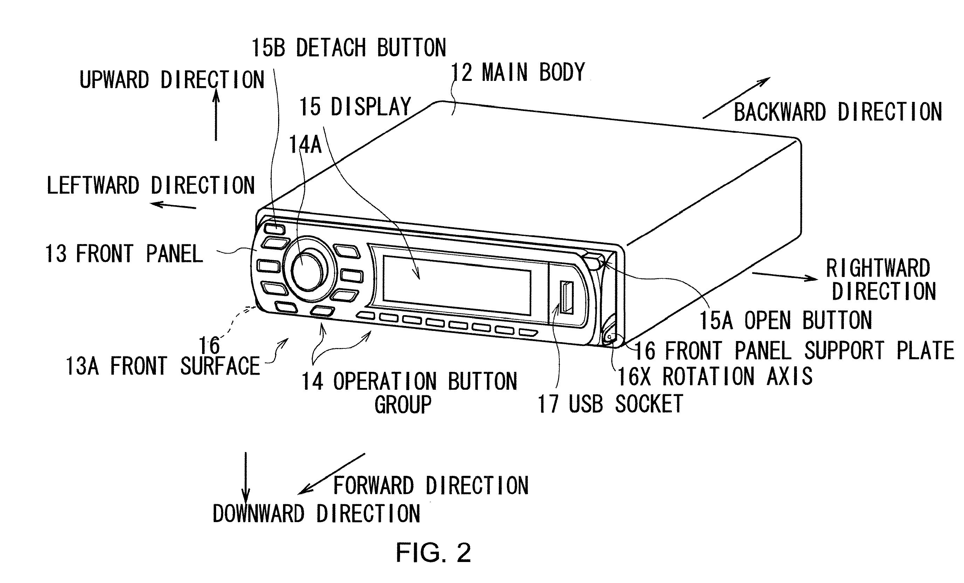

As shown in FIG. 2, the front panel 13 of the vehicle AV device 2 has on a front surface 13A thereof an operation button group 14 for accepting operations of the user, and a display 15 being, for example, a liquid crystal display for displaying various information for the user, and functions as a user interface. The display 15 is not restricted to a liquid crystal display, but may be a Fluorescent Lamp (FL) tube etc.

Specifically, in the operation button group 14, a finger grip 14A is provided. The finger grip is made of a rotary encoder, etc., which can be rotated to be operated, and which is used for the volume adjustment, tuning adjustment for radio, etc. In the vehicle AV device 2, according to a mode selected by the user, the functions of the finger grip 14A are switched between that for the volume adjustment and that for the tuning adjustment for radio.

The front panel 13 is supported by a rotation axis 16X of a front panel support plates 16 which protrudes forward from the main body 12, at the right and left lower sides thereof. When an open button 15A arranged on the right upper side of the front panel 13 is pushed by the user, the engagement state between the main body 12 and the front panel 13 are released, the front panel 13 rotates in the forward and downward direction with the rotation axis 16X of the front panel support plates 16 set to the rotation center, and the front surface 13A is opened and faces the downward direction (referred to as open state, hereinafter).

Furthermore, on the front panel 13, a detach button 15B is arranged on the left upper side thereof. When the detach button 15B is pushed by the user, the engagement state between the main body 12 and the front panel 13 are released, the attachment state between the front panel support plates 16 and the lower part of the front panel 13 are released, and the front panel 13 itself can be completely detached from the main body 12.

The main body 12 is provided with a disc insertion slot (not shown), into or from which a Compact Disc (CD) medium or a Digital Versatile Disc (DVD) medium is instead or discharged when the front panel 13 is set in the open state. The vehicle AV device 2 functions as a CD player when a CD medium is loaded therein, and functions as a DVD player when a DVD medium is loaded therein.

The vehicle AV device 2, shown in FIG. 1, is connected to a front left loudspeaker FL, a front right loudspeaker FR, a rear left loudspeaker RL, and a rear right loudspeaker RR, which are arranged at the four corners of the space inside the vehicle. The vehicle AV device 2 can output CD reproduced sound, DVD reproduced sound, radio broadcasting sound, and telephone call sound of the cellular phone 5, etc., as 4-ch.

In the electronic device system 1, when the communication link between the PND 3 and the cellular phone 5 is established, a sound of a telephone call party to be output from a speaker of the cellular phone 5 is transmitted to the vehicle AV device 2 through the PND 3 and PIN cable 4, is extended to 4-ch to be output from the front left loudspeaker FL, front right loudspeaker FR, rear left loudspeaker RL, and rear right loudspeaker RR of the vehicle AV device 2.

Furthermore, in the electronic device system 1, when the communication link between the PND 3 and the cellular phone 5 is established, the manner of collecting sound is switched so that user sound of the cellular phone 5 is collected not by a microphone of the cellular phone 5 but by a microphone 3A of the PND 3, and thus collected user sound is transmitted to a cellular phone of a telephone call party by radio by the cellular phone 5.

In this way, in the electronic device system 1, when the communication link between the PND 3 and the cellular phone 5 is established, while sound of a telephone call party is output from the front left loudspeaker FL, front right loudspeaker FR, rear left loudspeaker RL, and rear right loudspeaker RR of the vehicle AV device 2, user sound of the cellular phone 5 is collected by the microphone 3A of the PND 3, and thus collected user sound is transmitted to a cellular phone of a telephone call party by radio by the cellular phone 5, which makes it possible to make the entire vehicle AV device 2 and PND 3 function as a hands-free phone.

Next, the circuit configuration of the electronic device system 1 which makes the entire vehicle AV device 2 and PND 3 function as a hands-free phone when the communication link between the PND 3 and the cellular phone 5 is established will be explained.

### (1-2) Circuit configuration of electronic device system in first embodiment

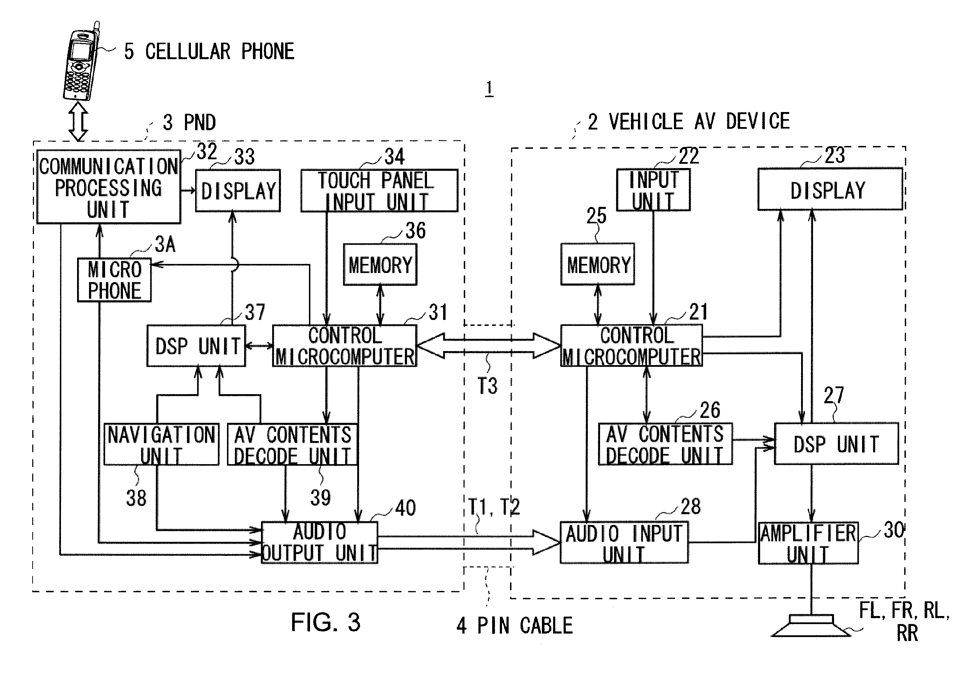

As shown in FIG. 3, in the vehicle AV device 2 of the electronic device system 1, a microcomputer for control (referred to as control microcomputer, hereinafter) 21 configured by a Central Processing Unit (CPU) operates in accordance with a basic program and an application program stored in a memory 25 to control the entire device and executes various processing.

Actually, in the vehicle AV device 2, an input unit 22 accepts a command which is input by the user through the operation button group 14 and finger grip 14A shown in FIG. 2, and sends the command to the control microcomputer 21.

With respect to sound data which is obtained by performing CD reproduction processing or DVD reproduction processing in an AV contents decode unit 26 in accordance with the command, the control microcomputer 21 of the vehicle AV device 2 makes a Digital Signal Processor (DSP) unit 27 perform predetermined digital signal processing, makes an amplifier unit 30 amplify thus obtained sound data to a predetermined level and then perform the digital-to-analog conversion for thus amplified sound data, and outputs the resulting data from the front left loudspeaker FL, front right loudspeaker FR, rear left loudspeaker RL, and rear right loudspeaker RR as CD reproduced sound or DVD reproduced sound.

At this time, when the AV contents decode unit 26 performs the CD reproduction processing, the control microcomputer 21 of the vehicle AV device 2 displays the music title, artist name, reproduction elapsed time, etc., of reproduced music of CD on a display 23, and, when the AV contents decode unit 26 performs the DVD reproduction processing, the control microcomputer 21 of the vehicle AV device 2 displays the chapter number, DVD reproduction elapsed time, and DVD reproduction remaining time, etc., on the display 23.

On the other hand, in the PND 3, a control microcomputer 31 configured by a CPU operates in accordance with a basic program and an application program stored in a memory 36 to control the entire device and executes various processing.

Specifically, the control microcomputer 31 of the PND 3 accepts a command which is input through a touch panel input unit 34. With respect to navigation image data which is obtained by making a navigation unit 38 operate according to the command, the control microcomputer 31 makes a DSP unit 37 perform predetermined digital signal processing, and displays thus obtained navigation image on a display 33.

At this time, the control microcomputer 31 of the PND 3 outputs navigation sound data, which is obtained by making the navigation unit 38 operate, from loudspeakers (not shown) arranged on the PND 3 itself through an audio output unit 40.

The PND 3 has an AV contents decode unit 39, and makes the AV contents decode unit 39 decode AV contents stored in the memory 36, and outputs thus obtained sound data of AV contents from loudspeakers (not shown) arranged on the PND 3 itself through the audio output unit 40.

Furthermore, the PND 3 establishes the radio communication link with the cellular phone 5 through a communication processing unit 32 configured by Bluetooth etc. At this time, the control microcomputer 31 transmits sound of the user collected by the microphone 3A to a cellular phone of a telephone call party by radio through the communication processing unit 32 and cellular phone 5, or transmits sound data of a telephone call party received through the cellular phone 5 and communication processing unit 32 to the vehicle AV device 2 from the audio output unit 40 through the left channel audio terminal T1 and right channel audio terminal T2 of the PIN cable 4.

At this time, the control microcomputer 21 of the vehicle AV device 2 makes the DSP unit 27 perform digital signal processing for sound data of a telephone call party received from the PND 3 through an audio input unit 28, and extends the resulting data to 4-ch and outputs the extended data from the front left loudspeaker FL, front right loudspeaker FR, rear left loudspeaker RL, and rear right loudspeaker RR through the amplifier unit 30 as sound of the telephone call party.

Next, the hands-free processing procedure of the hands-free function performed by the vehicle AV device 2 and the PND 3 in thus configured electronic device system 1, which is performed when the control microcomputer 21 of the vehicle AV device 2 and the control microcomputer 31 of the PND 3 operate in cooperation with each other in accordance with a shared processing program will be explained.

### (1-3) Hands-free processing procedure of electronic device system in first embodiment

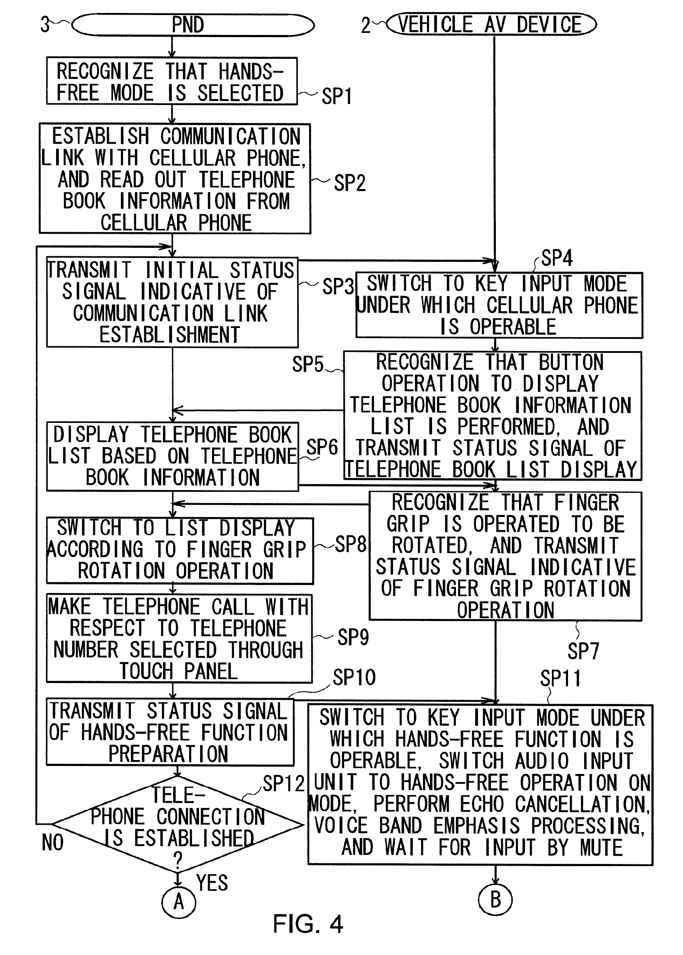

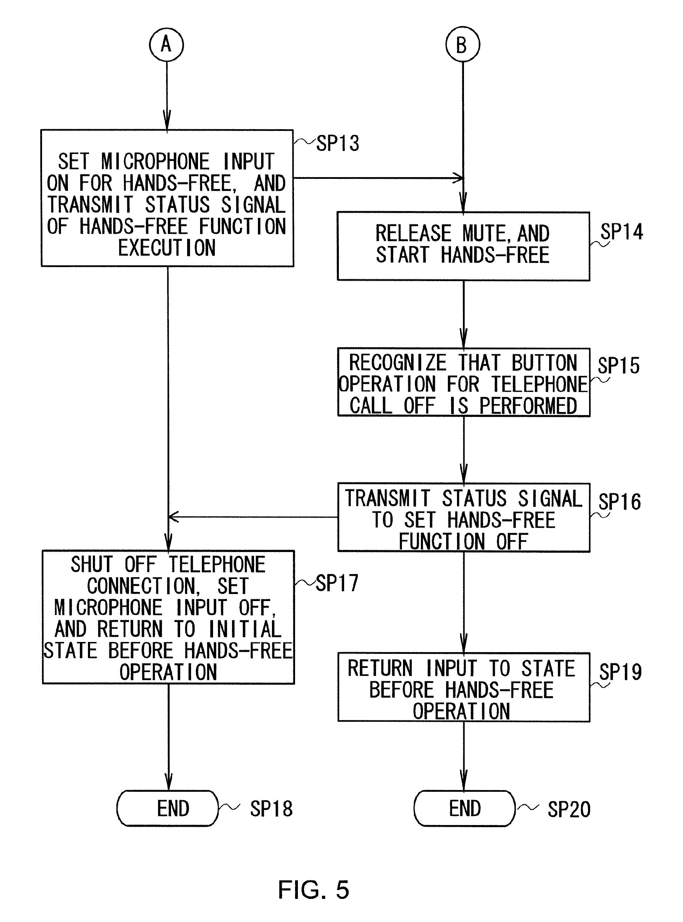

In the electronic device system 1 provided with the above-described basic configuration, as shown in FIG. 4 and FIG. 5, in step SP1, when the control microcomputer 31 of the PND 3 recognizes that the hands-free mode is selected by the user operation through the touch panel input unit 34, the processing goes to next step SP2.

In step SP 2, the control microcomputer 31 of the PND 3 establishes the communication link with the cellular phone 5, and reads out telephone book information stored in the cellular phone 5 to store thus read out telephone book information in the memory 36 once, and the processing goes to next step SP3.

In step SP3, since the communication link with the cellular phone 5 is established, the control microcomputer 31 of the PND 3 transmits an initial status signal indicative of this communication link establishment to the vehicle AV device 2 through the communication line terminal T3 of the PIN cable 4, and then the processing goes to next step SP4.

In step SP4, since the initial status signal indicating that the communication link with the cellular phone 5 is established is received from the PND 3, the control microcomputer 21 of the vehicle AV device 2 switches the mode to a key input mode under which the cellular phone 5 is operable through the PND 3 using the operation button group 14 of the vehicle AV device 2, and then the processing goes to next step SP5.

In step SP5, when recognizing that the button operation to display a telephone book list held in the cellular phone 5 on the display 33 of the PND 3 is performed, the control microcomputer 21 of the vehicle AV device 2 transmits a status signal of this telephone book list display to the PND 3 through the communication line terminal T3 of the PIN cable 4, and then the processing goes to next step SP6.

In step SP6, in accordance with the status signal of the telephone book list display received from the control microcomputer 21 of the vehicle AV device 2, the control microcomputer 31 of the PND 3 reads out the telephone book information read out from the cellular phone 5 and stored in the memory 36, and displays the telephone book list on the display 33 based on the telephone book information, and then the processing goes to next step SP7.

In step SP7, when recognizing that the finger grip 14A of the operation button group 14 is operated to be rotated, the control microcomputer 21 of the vehicle AV device 2 transmits a status signal indicative of the rotation amount when the finger grip 14A is operated to be rotated to the PND 3 through the communication line terminal T3 of the PIN cable 4, and then the processing goes to next step SP8.

In step SP8, in accordance with the status signal indicative of the rotation operation amount with respect to the finger grip 14A, the control microcomputer 31 of the PND 3 switches the display subject of the telephone book list displayed on the display 33 by scrolling it, and then the processing goes to next step SP9.

In step SP9, of the telephone book list displayed on the display 33, the control microcomputer 31 of the PND 3 recognizes a telephone number selected by the user through the touch panel input unit 34, and makes a telephone call with respect to the telephone number from the cellular phone 5, and then the processing goes to next step SP10.

In step SP10, the control microcomputer 31 of the PND 3 transmits a status signal of the hands-free function preparation to the vehicle AV device 2 through the communication line terminal T3 of the PIN cable 4, and then the processing goes to next step SP11.

In step SP11, since the status signal of the hands-free function preparation is received from the PND 3, the control microcomputer 21 of the vehicle AV device 2 switches the mode to a key input mode under which the hands-free function is operable using the operation button group 14 of the vehicle AV device 2, switches the mode of the audio input unit 28 to a hands-free operation ON mode, performs the echo cancellation in the DSP unit 27, preparation for the voice band emphasis processing, and waits for an input of hands-free sound from the PND 3 by the mute processing.

At this time, in step SP12, the control microcomputer 31 of the PND 3 determines whether or not the telephone connection with a telephone call party by the cellular phone 5 is established, and the processing returns to step SP3 to repeat the above-described processing when a negative result is obtained, while the processing goes to next step SP13 when a positive result is obtained.

In step SP13, the control microcomputer 31 of the PND 3 sets the microphone input of the microphone 3A ON for the hands-free, and transmits a status signal indicating that the hands-free function is executed to the vehicle AV device 2 through the communication line terminal T3 of the PIN cable 4, and then the processing goes to next step SP14.

In step SP14, since the status signal indicating that the hands-free function is executed is received from the PND 3, the control microcomputer 21 of the vehicle AV device 2 starts the hands-free operation by releasing the mute state, and then the processing goes to next step SP15.

In step SP15, when the control microcomputer 21 of the vehicle AV device 2 recognizes that the button operation for turning off the telephone call is performed through the operation button group 14 during the hands-free operation, the processing goes to next step SP16.

In step SP16, since the button operation for turning off the telephone call is executed during the hands-free operation, the control microcomputer 21 of the vehicle AV device 2 transmits a status signal to set the hands-free operation OFF to the PND 3 through the communication line terminal T3 of the PIN cable 4, and then the processing goes to next step SP17.

In step SP17, since the status signal to set the hands-free operation OFF is received from the vehicle AV device 2, the control microcomputer 31 of the PND 3 shuts off the telephone connection by the cellular phone 5, and returns the state to the initial state before the hands-free operation by setting the microphone input of the microphone 3A OFF, and then the processing goes to next step SP18 to end the processing in the PND 3.

On the other hand, in step SP19, in order to set the hands-free operation OFF, the control microcomputer 21 of the vehicle AV device 2 returns the state to the state before the hands-free operation by switching the mode of the audio input unit 28 to a hands-free operation OFF mode, and then the processing goes to next step SP20 to end the processing in the vehicle AV device 2.

### (1-4) Operation and effect in first embodiment

In the above-described configuration, in the electronic device system 1, when the vehicle AV device 2 and the PND 3 are connected to each other through the PIN cable 4 for mutual communication, and the communication link between the PND 3 and the cellular phone 5 is established, an initial status signal of the communication link establishment is transmitted from the PND 3 to the vehicle AV device 2, and the control microcomputer 21 of the vehicle AV device 2 is made to recognize the initial status signal, which can switch the mode of the cellular phone 5 to an externally operable key input mode using the operation button group 14 of the vehicle AV device 2.

That is, in the electronic device system 1, the cellular phone 5 can be operated externally using the operation button group 14 of the vehicle AV device 2, and a command to display the telephone book list held in the cellular phone 5 on the display 33 of the PND 3 can be input by the user instead through the operation button group 14 of the vehicle AV device 2, with which the button operation is easily performed, without operating the cellular phone 5.

At this time, the control microcomputer 31 of the PND 3 receives a status signal to display the telephone book list from the vehicle AV device 2, and, by recognizing the status signal, when the communication link between the PND 3 and the cellular phone 5 is established, the telephone book list can be displayed on the display 33 based on the telephone book information which has been read out from the cellular phone 5 to be stored in the memory 36 previously.

That is, the control microcomputer 31 of the PND 3 displays the telephone book list of the cellular phone 5 on the display 33 instead whose screen size is larger than that of the cellular phone 5, which can significantly improve the visibility of the user with respect to the telephone book list.

Then, from the telephone book list displayed on the display 33, the PND 3 makes the user select a telephone number to make a telephone call, and a status signal to prepare the hands-free operation is transmitted to the vehicle AV device 2, which can make the vehicle AV device 2 prepare to execute the hands-free operation.

Accordingly, in the electronic device system 1, the microphone 3A of the PND 3 collects a sound of the user, and the sound data is transmitted to a telephone call party from the communication processing unit 32 through the cellular phone 5. On the other hand, sound of the telephone call party received by the cellular phone 5 is output from the respective loudspeakers FL, FR, RL, and RR of the vehicle AV device 2, which can realize the hands-free function.

In this way, in the electronic device system 1, the vehicle AV device 2 is made to perform the operation with respect to the cellular phone 5 instead, the PND 3 is made to perform displaying the telephone book list instead, the PND 3 is made to perform the microphone input instead, and the respective loudspeakers FL, FR, RL, and RR of the vehicle AV device 2 are made to perform the sound output of a telephone call party instead, which can execute the hands-free operation by the mutual cooperation of the vehicle AV device 2 and PND 3 instead of the cellular phone 5.

Under the above-described configuration, in the electronic device system 1, various status signals are sent and received between the vehicle AV device 2 and the PND 3. By making the respective functions cooperate with each other, a user interface which combines the mutual functions of the respective devices can be obtained without employing the mutual relationship of the master and slave, and the hands-free operation can be realized with desired operability using the vehicle AV device 2 and PND 3 by performing the respective functions of the cellular phone 5 instead.

Furthermore, in the electronic device system 1, while the vehicle AV device 2 is attached to be fixed to a predetermined position or the supply opening of an air conditioner arranged in the space inside the vehicle, or the lower part of an air conditioner operation panel, where the driver turns his eyes away from the driving visual line, the PND 3 is attached to an arbitrary position in the space inside the vehicle, where the driver does not turn his eyes away from the driving visual line largely, using an adhesive disc, the vehicle AV device 2 and PND 3 are made to mutually cooperate with each other, the telephone book list of the cellular phone 5 is displayed through the display 33 of the PND 3, and the user is made to select a telephone number to make a telephone call from among the telephone book list, which can execute the hands-free operation without making the driver turn his eyes away from the driving visual line.

### (2) Second Embodiment

### (2-1) Overall configuration of electronic device system in second embodiment

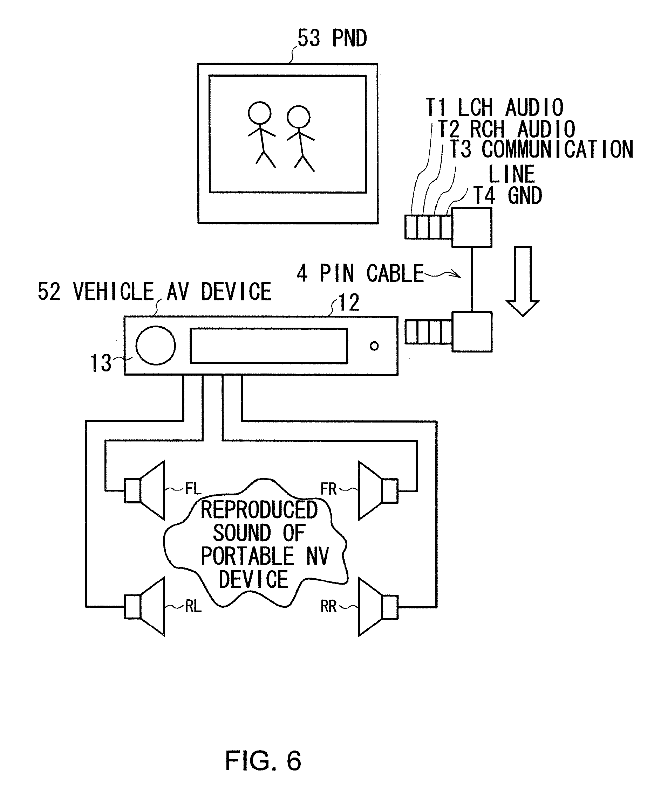

In FIG. 6, in which parts or components similar to those in FIG. 1 are indicated with the same reference numerals, a reference numeral "51" represents an electronic device system in the second embodiment. To a vehicle AV device 52 which is arranged in a space inside a vehicle, a PND 53 is connected through the PIN cable 4.

The PIN cable 4 has the left channel audio terminal T1, right channel audio terminal T2, communication line terminal T3, and ground terminal T4, and, through the communication line terminal T3, various commands and status signals are sent and received between the vehicle AV device 52 and the PND 53. Through the left channel audio terminal T1 and right channel audio terminal T2, sound data supplied from the PND 53 is transmitted to the vehicle AV device 52.

When mounted to a vehicle (not shown), due to the spatial restriction inside the vehicle, the vehicle AV device 52 has its most part of the main body 12 thereof built in the dashboard, and is attached such that only the front panel 13 thereof is exposed to the outside of the dashboard. The configuration of the front panel 13 is similar to that of the vehicle AV device 2 in the first embodiment, and the explanation of which is omitted here.

The vehicle AV device 52 is also connected to the front left loudspeaker FL, front right loudspeaker FR, rear left loudspeaker RL, and rear right loudspeaker RR, which are arranged at the four corners of the space inside the vehicle, and outputs CD reproduced sound, DVD reproduced sound, radio broadcasting sound, etc.

In the electronic device system 51, when the vehicle AV device 52 and PND 53 are connected by the PIN cable 4, a reproduced image of AV contents which has been stored in the PND 53 previously is displayed on the display 33 of the PND 53, and reproduced sound of AV contents is extended to 4-ch to be output from the respective loudspeakers FL, FR, RL, and RR of the vehicle AV device 52.

Next, the circuit configuration of the electronic device system 51, in which the reproduced sound of AV contents by the PND 53 is extended to 4-ch to be output from the respective loudspeakers FL, FR, RL, and RR of the vehicle AV device 52 when the vehicle AV device 52 and PND 53 are connected by the PIN cable 4 will be explained.

### (2-2) Circuit configuration of electronic device system in second embodiment

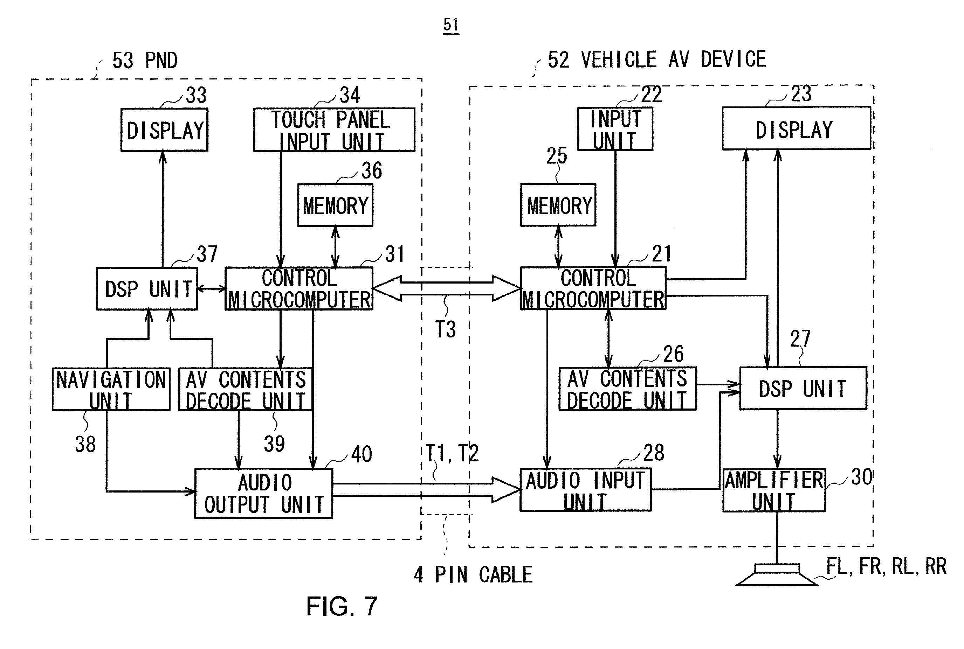

As shown in FIG. 7, in which parts or components similar to those in FIG. 3 are indicated with the same reference numerals, in the vehicle AV device 52 of the electronic device system 51, similar to the vehicle AV device 2 shown in FIG. 3 in the first embodiment, the control microcomputer 21 configured by a CPU operates in accordance with a basic program and an application program stored in the memory 25 to control the entire device and executes various processing.

Actually, in the vehicle AV device 52, the input unit 22 accepts a command which is input by the user through the operation button group 14 and finger grip 14A, and sends the command to the control microcomputer 21.

With respect to sound data which is obtained by performing CD reproduction processing or DVD reproduction processing in the AV contents decode unit 26 in accordance with the command, the control microcomputer 21 of the vehicle AV device 52 makes the DSP unit 27 perform predetermined digital signal processing, makes the amplifier unit 30 amplify thus obtained sound data to a predetermined level and then perform the digital-to-analog conversion for thus amplified sound data, and outputs the resulting data from the front left loudspeaker FL, front right loudspeaker FR, rear left loudspeaker RL, and rear right loudspeaker RR as CD reproduced sound or DVD reproduced sound.

At this time, when the AV contents decode unit 26 performs the CD reproduction processing, the control microcomputer 21 displays the music title, artist name, reproduction elapsed time, etc. of reproduced music of CD on the display 23. When the AV contents decode unit 26 performs the DVD reproduction processing, the control microcomputer 21 displays the chapter number, DVD reproduction elapsed time, and DVD reproduction remaining time, etc., on the display 23.

On the other hand, also in the PND 53, similar to the PND 3 shown in FIG. 3 in the first embodiment, the control microcomputer 31 configured by a CPU operates in accordance with a basic program and an application program stored in the memory 36 to control the entire device and executes various processing.

Specifically, the control microcomputer 31 of the PND 53 accepts a command which is input through the touch panel input unit 34. With respect to navigation image data which is obtained by making the navigation unit 38 operate according to the command, the control microcomputer 31 makes the DSP unit 37 perform predetermined digital signal processing, and displays thus obtained navigation image on the display 33.

At this time, the control microcomputer 31 of the PND 53 outputs navigation sound data, which is obtained by making the navigation unit 38 operate, from loudspeakers (not shown) arranged on the PND 53 itself through the audio output unit 40.

Furthermore, the PND 53 has the AV contents decode unit 39, and makes the AV contents decode unit 39 decode AV contents stored previously in the memory 36, displays thus obtained reproduced image of AV contents on the display 33 through the DSP unit 37, and outputs the reproduced sound of AV contents from loudspeakers (not shown) arranged on the PND 3 itself through the audio output unit 40.

The control microcomputer 21 of the vehicle AV device 52 is supplied with a parking brake detection signal (not shown) from the vehicle. When the control microcomputer 31 is not supplied with a parking brake detection signal, that is, when the parking brake is released, a status signal which prohibits reflecting an image of AV contents on the display 33 of the PND 53 is transmitted to the control microcomputer 31 of the PND 53, and the vehicle AV device 52 controls displaying a reproduced image of AV contents by the PND 53.

Furthermore, when the PND 53 is mutually connected to the vehicle AV device 52 through the PIN cable 4, reproduced sound data of AV contents obtained by performing decoding using the AV contents decode unit 39 is sent to the vehicle AV device 52 from the audio output unit 40 through the left channel audio terminal T1 and right channel audio terminal T2 of the PIN cable 4.

At this time, the control microcomputer 21 of the vehicle AV device 52 extends the reproduced sound data of AV contents received from the PND 3 through the audio input unit 28 to 4-ch and outputs the extended sound data from the front left loudspeaker FL, front right loudspeaker FR, rear left loudspeaker RL, and rear right loudspeaker RR through the DSP unit 27 and amplifier unit 30 as the reproduced sound of AV contents.

Next, the sound extension processing procedure in thus configured electronic device system 51, in which the control microcomputer 21 of the vehicle AV device 52 and the control microcomputer 31 of the PND 53 operate in cooperation with each other in accordance with a shared processing program, and the reproduced sound of AV contents by the PND 53 is extended to 4-ch to be output from the respective loudspeakers FL, FR, RL, and RR of the vehicle AV device 52 will be explained hereinafter.

### (2-3) Sound extension processing procedure of electronic device system in second embodiment

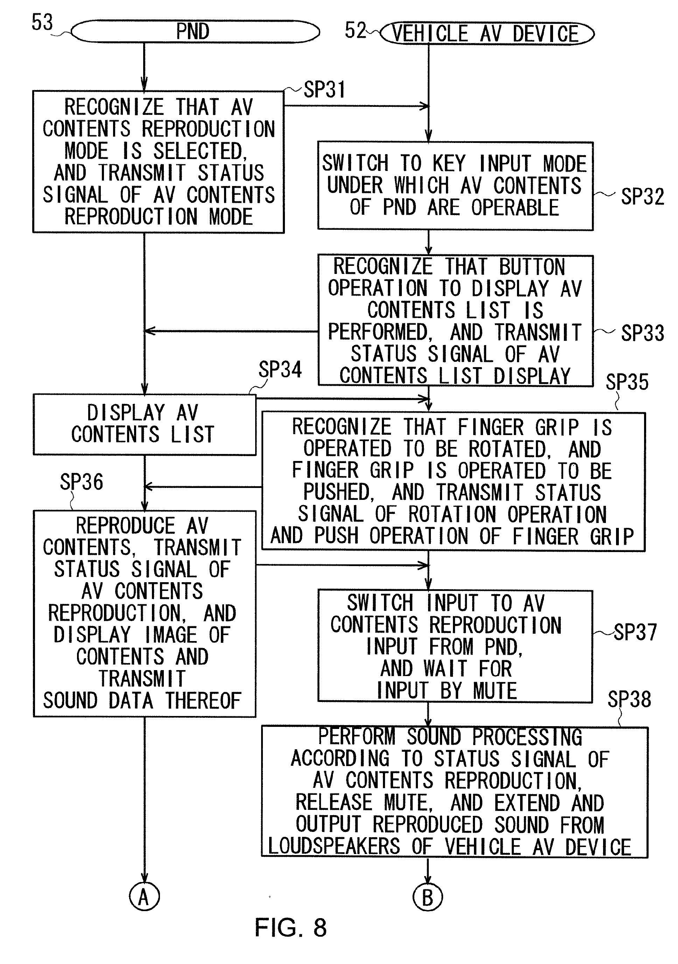

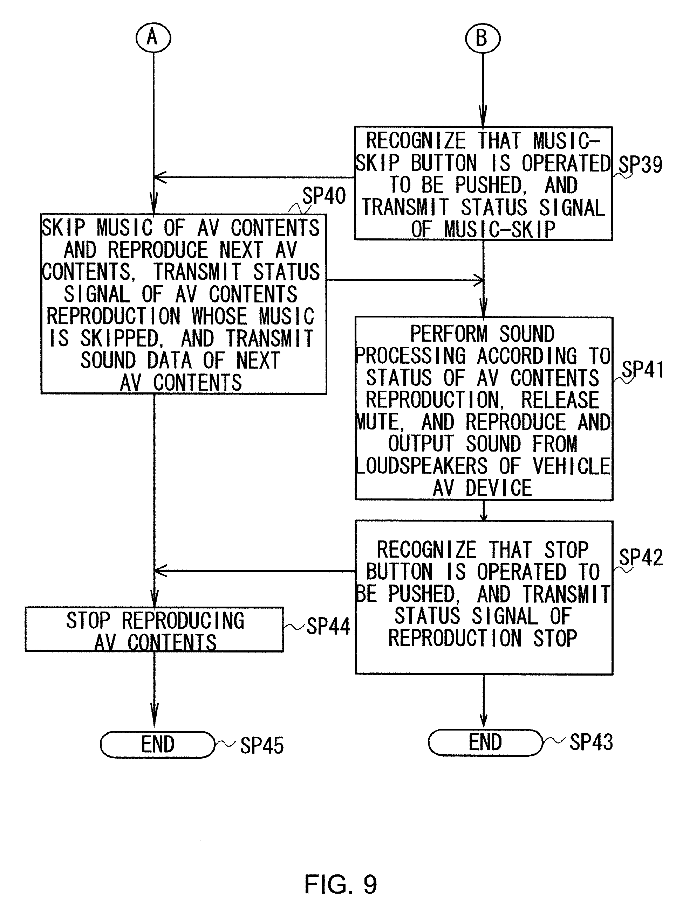

In the electronic device system 51 provided with the above-described basic configuration, as shown in FIG. 8 and FIG. 9, in step SP 31, when the control microcomputer 31 of the PND 53 recognizes that the AV contents reproduction mode is selected by the user operation, a status signal of the AV contents reproduction mode is transmitted to the vehicle AV device 52 through the communication line terminal T3 of the PIN cable 4, and the processing goes to next step SP32.

In step SP32, since the status signal of the AV contents reproduction mode is received from the PND 53, the control microcomputer 21 of the vehicle AV device 52 switches the mode to a key input mode under which the AV contents of the PND 53 are operable using the operation button group 14 of the vehicle AV device 52, and then the processing goes to next step SP33.

In step SP33, when recognizing that the button operation to display an AV contents list of the PND 53 on the display 33 of the PND 53 is performed, the control microcomputer 21 of the vehicle AV device 52 transmits a status signal of this AV contents list display to the PND 53 through the communication line terminal T3 of the PIN cable 4, and then the processing goes to next step SP34.

In step SP34, in accordance with the status signal of the AV contents list display received from the control microcomputer 21 of the vehicle AV device 52, the control microcomputer 31 of the PND 53 reads out the AV contents list stored in the memory 36, and displays thus read out AV contents list on the display 33, and then the processing goes to next step SP35.

In step SP35, when recognizing that the finger grip 14A of the operation button group 14 is operated to be rotated by the user who checks the AV contents list with eyes, and the finger grip 14A is operated to be pushed, the control microcomputer 21 of the vehicle AV device 52 transmits a status signal indicative of the rotation operation and push operation of the finger grip 14A to the PND 53 through the communication line terminal T3 of the PIN cable 4, and then the processing goes to next step SP36.

In step SP36, from the AV contents list displayed on the display 33 according to the status signal indicative of the rotation operation and push operation of the finger grip 14A, the control microcomputer 31 of the PND 53 determines AV contents to be reproduced and reproduces thus determined AV contents, and transmits a status signal of the AV contents reproduction to the vehicle AV device 52 through the communication line terminal T3 of the PIN cable 4.

At this time, when image data is added to the reproduced AV contents, the control microcomputer 31 of the PND 53 displays the image on the display 33, and transmits sound data of the AV contents to the vehicle AV device 52 through the left channel audio terminal T1 and right channel audio terminal T2 of the PIN cable 4, and then the processing goes to next step SP37.

In step SP37, in accordance with the status signal of the AV contents reproduction received from the PND 53, the control microcomputer 21 of the vehicle AV device 52 switches the audio input unit 28 to the AV contents reproduction input from the PND 53, and waits for an input by the mute processing, and then the processing goes to next step SP38.

In step SP38, the control microcomputer 21 of the vehicle AV device 52 performs sound processing (for example, equalizing processing etc.) according to the status signal of the AV contents reproduction with respect to sound data of AV contents received from the PND 53, and, after releasing the mute processing, extends the reproduced sound of AV contents to 4-ch to output thus extended reproduced sound from the respective loudspeakers FL, FR, RL, and RR, and then the processing goes to next step SP39.

In step SP39, when a music-skip button of the operation button group 14 is operated to be pushed by the user, the control microcomputer 21 of the vehicle AV device 2 transmits a status signal of the music-skip to the PND 53 through the communication line terminal T3 of the PIN cable 4, and then the processing goes to next step SP40.

In step SP40, in accordance with the status signal of the music-skip received from the vehicle AV device 52, the control microcomputer 31 of the PND 53 skips the music of the currently reproduced AV contents, reproduces the next AV contents, and transmits a status signal of AV contents reproduction whose music is skipped and sound data of next AV contents after the skipped music to the vehicle AV device 52 through the left channel audio terminal T1 and right channel audio terminal T2 of the PIN cable 4, and then the processing goes to next step SP41.

In step SP41, the control microcomputer 21 of the vehicle AV device 52 performs sound processing according to the status signal of the AV contents reproduction with respect to sound data of the next AV contents received from the PND 53, and, after releasing the mute processing, extends reproduced sound of the next AV contents after skipping the music to 4-ch to output thus extended reproduced sound from the respective loudspeakers FL, FR, RL, and RR, and then the processing goes to next step SP42.

In step SP42, when recognizing that a stop button of the operation button group 14 is operated to be pushed, the control microcomputer 21 of the vehicle AV device 52 generates a status signal of stopping the reproduction and transmits the status signal to the PND 53 through the communication line terminal T3 of the PIN cable 4, and then the processing goes to next step SP43 to end the processing of the vehicle AV device 52.

At this time, in step SP44, in accordance with the status signal of stopping the reproduction received from the vehicle AV device 52, the control microcomputer 31 of the PND 53 stops reproduction processing of AV contents which are being reproduced, and then the processing goes to next step SP45 to end the processing of the PND 53.

### (2-4) Operation and effect in second embodiment

In the above-described configuration, in the electronic device system 51, when the vehicle AV device 52 and the PND 53 are connected to each other through the PIN cable 4 so that mutual communication is possible, the PND 53 transmits the status signal of AV contents reproduction mode to the vehicle AV device 52, and the control microcomputer 21 of the vehicle AV device 52 is made to recognize the status signal of AV contents reproduction mode, which can switch the mode to a key input mode under which the AV contents of the PND 53 are operable using the operation button group 14 of the vehicle AV device 52.

That is, in the electronic device system 51, the PND 53 can be operated externally using the operation button group 14 of the vehicle AV device 52, the AV contents list held in the PND 53 can be displayed on the display 33 of the PND 3, and AV contents desired by the user can be selected and determined from the AV contents list through the finger grip 14A of the vehicle AV device 2 which is easy in button operation.

At this time, while the control microcomputer 31 of the PND 53 reproduces AV contents which are selected and determined by the finger grip 14A of the vehicle AV device 52, in case the AV contents are data composed of image and sound such as a video music clip, the reproduction image is displayed on the display 33 of the PND 53.

After switching the audio input unit 28 to AV contents reproduction input from the PND 53 in accordance with the status signal of the AV contents reproduction transmitted from the PND 53, the control microcomputer 31 of the vehicle AV device 52 receives sound data of AV contents, and extends the reproduced sound of AV contents to 4-ch to output thus extended reproduced sound from the respective loudspeakers FL, FR, RL, and RR connected to the vehicle AV device 52.

That is, in the electronic device system 51, while the reproduced image of the AV contents held in the PND 53 is displayed on the display 33 of the PND 53, the reproduced sound of the AV contents is output not from loudspeakers of the PND 53 but from the respective loudspeakers FL, FR, RL, and RR of the vehicle AV device 52 in the state of being extended to 4-ch with high quality.

In this way, in the electronic device system 51, the operation to select and determine the AV contents held in the PND 53 is performed using the finger grip 14A of the operation button group 14 of the vehicle AV device 52, and the reproduced sound of the AV contents reproduced by the PND 53 is extended to be output from the respective loudspeakers FL, FR, RL, and RR of the vehicle AV device 52 instead with high quality.

Under the above-described configuration, in the electronic device system 51, various status signals are sent and received between the vehicle AV device 52 and the PND 53 mutually, and, by making the respective functions cooperate with each other, a user interface which combines the mutual functions of the respective devices can be obtained without employing the mutual relationship of the master and slave, and, by making the vehicle AV device 52 perform the AV contents reproduction function (in this case, outputting reproduced sound) of the PND 53 partially instead, the reproduced sound of the PND 53 can be extended to be output from the respective loudspeakers FL, FR, RL, and RR with high quality.

### (3) Third Embodiment

### (3-1) Overall configuration of electronic device system in third embodiment

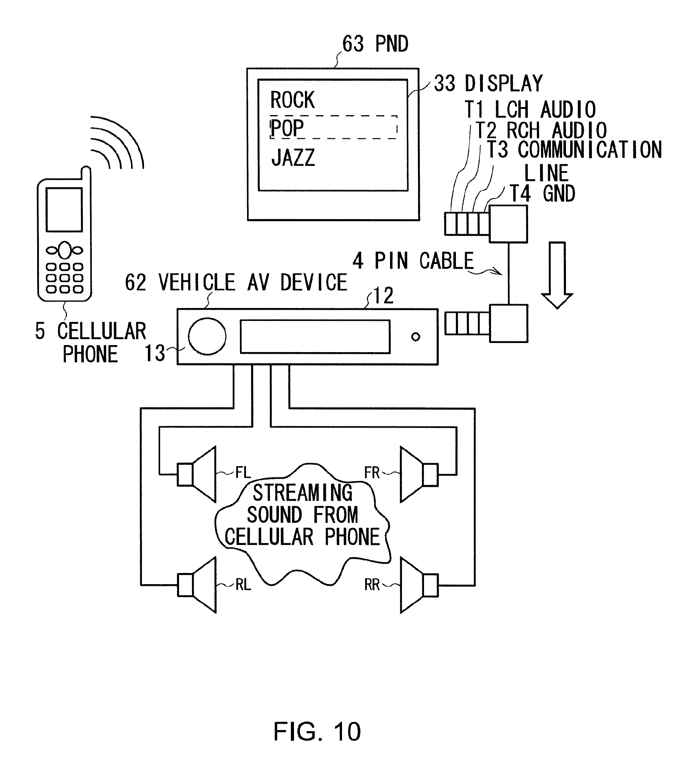

In FIG. 10, in which parts or components similar to those in FIG. 1 are indicated with the same reference numerals, a reference numeral "61" represents an electronic device system in the third embodiment. To a vehicle AV device 62 which is arranged in a space inside a vehicle, a PND 63 is connected through the PIN cable 4, and, to the PND 63, the cellular phone 5 is wirelessly connected by a wireless communication such as Bluetooth.

The PIN cable 4 has the left channel audio terminal T1, right channel audio terminal T2, communication line terminal T3, and ground terminal T4. Through the communication line terminal T3, various commands and status signals are sent and received between the vehicle AV device 62 and the PND 63, and, through the left channel audio terminal T1 and right channel audio terminal T2, sound data supplied from the PND 63 is transmitted to the vehicle AV device 62.

When mounted to a vehicle (not shown), due to the spatial restriction inside the vehicle, the vehicle AV device 62 has its most part of the main body 12 thereof built in the dashboard, and is attached such that only the front panel 13 thereof is exposed to the outside of the dashboard. The configuration of the front panel 13 is similar to that of the vehicle AV device 2 in the first embodiment, and the explanation of which is omitted here.

The vehicle AV device 62 shown in FIG. 10 is connected to the front left loudspeaker FL, front right loudspeaker FR, rear left loudspeaker RL, and rear right loudspeaker RR, which are arranged at the four corners of the space inside the vehicle, and outputs CD reproduced sound, DVD reproduced sound, radio broadcasting sound, and telephone call sound of the cellular phone 5, etc.

In the electronic device system 61, when the communication link between the PND 63 and the cellular phone 5 is established, streaming data of AV contents held in the cellular phone 5 is transmitted to the vehicle AV device 62 through the PND 63 and PIN cable 4, and is output from the front left loudspeaker FL, front right loudspeaker FR, rear left loudspeaker RL, and rear right loudspeaker RR of the vehicle AV device 62 as streaming sound.

In this way, in the electronic device system 61, when the communication link between the PND 63 and the cellular phone 5 is established, streaming data of AV contents held in the cellular phone 5 is transmitted to the vehicle AV device 62 from the PND 63 through the PIN cable 4, and streaming sound of AV contents is extended to 4-ch to be output from the front left loudspeaker FL, front right loudspeaker FR, rear left loudspeaker RL, and rear right loudspeaker RR of the vehicle AV device 62.

Next, the circuit configuration of the electronic device system 61, in which the streaming sound of the AV contents held in the cellular phone 5 is extended to be output by the entire vehicle AV device 62 and PND 63 when the communication link between the PND 63 and the cellular phone 5 is established will be explained.

### (3-2) Circuit configuration of electronic device system in third embodiment

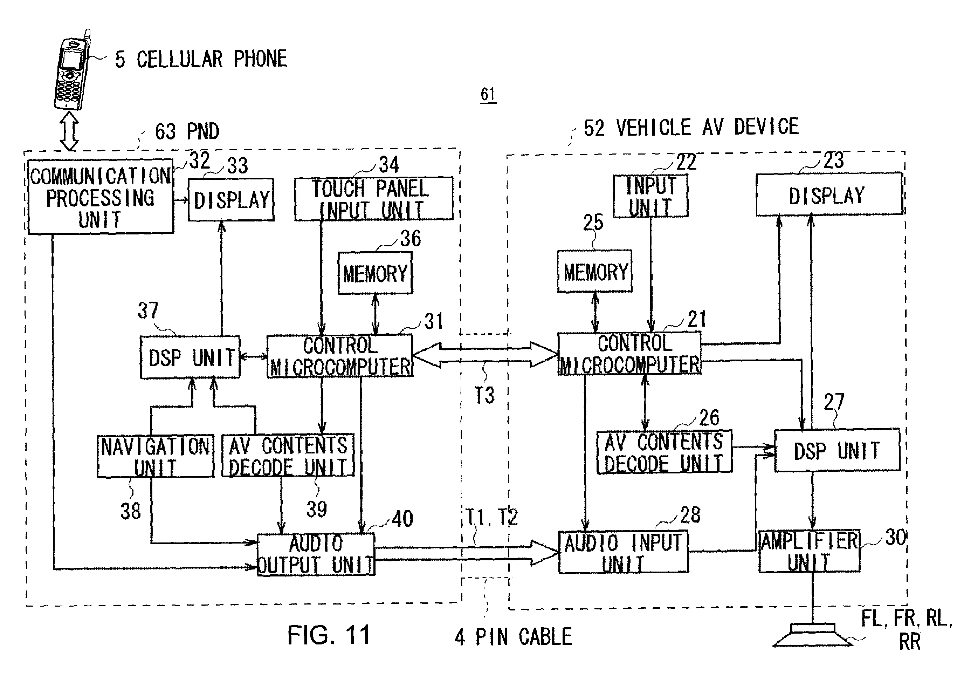

As shown in FIG. 11, in which parts or components similar to those in FIG. 3 are indicated with the same reference numerals, in the vehicle AV device 62 of the electronic device system 61, the control microcomputer 21 configured by a CPU operates in accordance with a basic program and an application program stored in the memory 25 to control the entire device and executes various processing.

Actually, in the vehicle AV device 62, the input unit 22 accepts a command which is input by the user through the operation button group 14 and finger grip 14A, and sends the command to the control microcomputer 21.

With respect to sound data which is obtained by performing the CD reproduction processing or DVD reproduction processing in the AV contents decode unit 26 in accordance with the command, the control microcomputer 21 of the vehicle AV device 62 makes the DSP unit 27 perform predetermined digital signal processing, makes the amplifier unit 30 amplify thus obtained sound data to a predetermined level and then perform the digital-to-analog conversion for thus amplified sound data, and outputs the resulting data from the front left loudspeaker FL, front right loudspeaker FR, rear left loudspeaker RL, and rear right loudspeaker RR as CD reproduced sound or DVD reproduced sound.

At this time, when the AV contents decode unit 26 performs the CD reproduction processing, the control microcomputer 21 displays the music title, artist name, reproduction elapsed time, etc. of reproduced music of CD on the display 23. When the AV contents decode unit 26 performs the DVD reproduction processing, the control microcomputer 21 displays the chapter number, DVD reproduction elapsed time, and DVD reproduction remaining time, etc., on the display 23.

On the other hand, also in the PND 63, similar to the PND 3 shown in FIG. 3 in the first embodiment, the control microcomputer 31 configured by a CPU operates in accordance with a basic program and an application program stored in the memory 36 to control the entire device and executes various processing.

Specifically, the control microcomputer 31 of the PND 63 accepts a command which is input through the touch panel input unit 34. With respect to navigation image data which is obtained by making the navigation unit 38 operate according to the command, the control microcomputer 31 makes the DSP unit 37 perform predetermined digital signal processing, and displays thus obtained navigation image on the display 33.

At this time, the control microcomputer 31 of the PND 63 outputs navigation sound data, which is obtained by making the navigation unit 38 operate, from loudspeakers (not shown) arranged on the PND 63 itself through the audio output unit 40.

Furthermore, the PND 63 has the AV contents decode unit 39, makes the AV contents decode unit 39 decode AV contents stored in the memory 36, displays thus obtained reproduced image of AV contents on the display 33 through the DSP unit 37, and outputs the reproduced sound of AV contents from loudspeakers (not shown) arranged on the PND 63 itself through the audio output unit 40.

The control microcomputer 21 of the vehicle AV device 62 is supplied with a parking brake detection signal (not shown) from the vehicle. When the control microcomputer 31 is not supplied with a parking brake detection signal, that is, when the parking brake is released, a status signal which prohibits reflecting an image of AV contents on the display 33 of the PND 63 is transmitted to the control microcomputer 31 of the PND 63, and the vehicle AV device 62 controls displaying a reproduced image of AV contents by the PND 63.

Furthermore, when the PND 63 is mutually connected to the vehicle AV device 62 through the PIN cable 4, and the communication link with the cellular phone 5 is established, the communication processing unit 32 takes in AV contents (for example, video music clip) held in the cellular phone 5 as streaming data, and, of the streaming data, streaming reproduced image data is displayed on the display 33 as a streaming reproduced image, while streaming reproduced sound data of AV contents is transmitted to the vehicle AV device 62 from the audio output unit 40 through the left channel audio terminal T1 and right channel audio terminal T2 of the PIN cable 4.

At this time, the control microcomputer 21 of the vehicle AV device 62 makes the DSP unit 27 perform digital signal processing for the streaming reproduced sound data from the cellular phone 5 received from the PND 63 through the audio input unit 28, extends the resulting data to 4-ch and outputs the extended data from the front left loudspeaker FL, front right loudspeaker FR, rear left loudspeaker RL, and rear right loudspeaker RR through the amplifier unit 30 as streaming reproduced sound of AV contents by the cellular phone 5.

Next, the streaming reproduction processing procedure in thus configured electronic device system 61, in which the control microcomputer 21 of the vehicle AV device 62 and the control microcomputer 31 of the PND 63 operate in cooperation with each other in accordance with a shared processing program, and the vehicle AV device 62 and PND 63 perform the streaming reproduction function of the cellular phone 5 instead will be explained hereinafter.

### (3-3) Streaming reproduction processing procedure of electronic device system in third embodiment

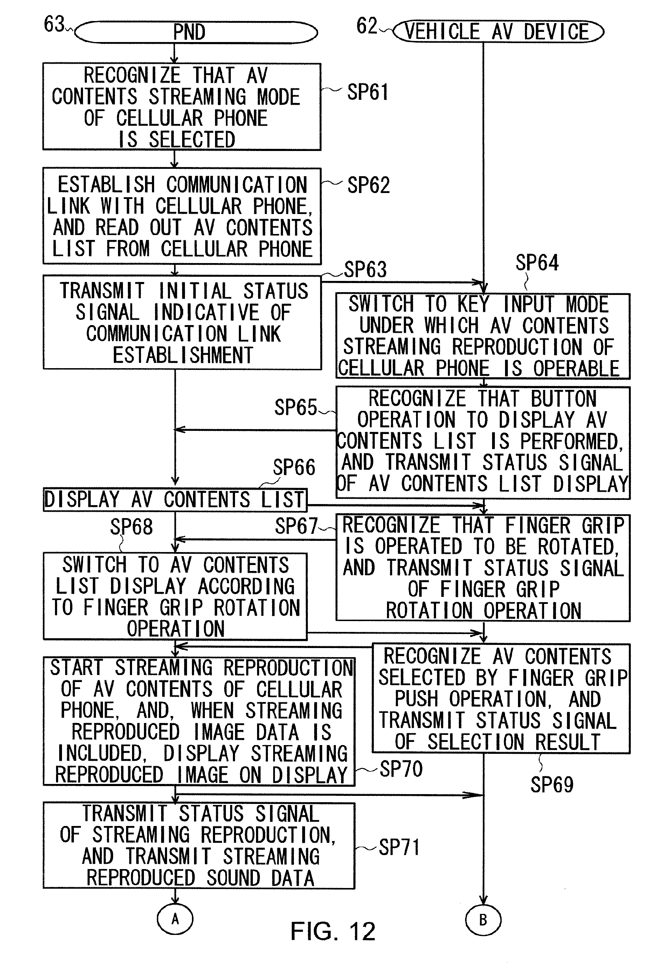

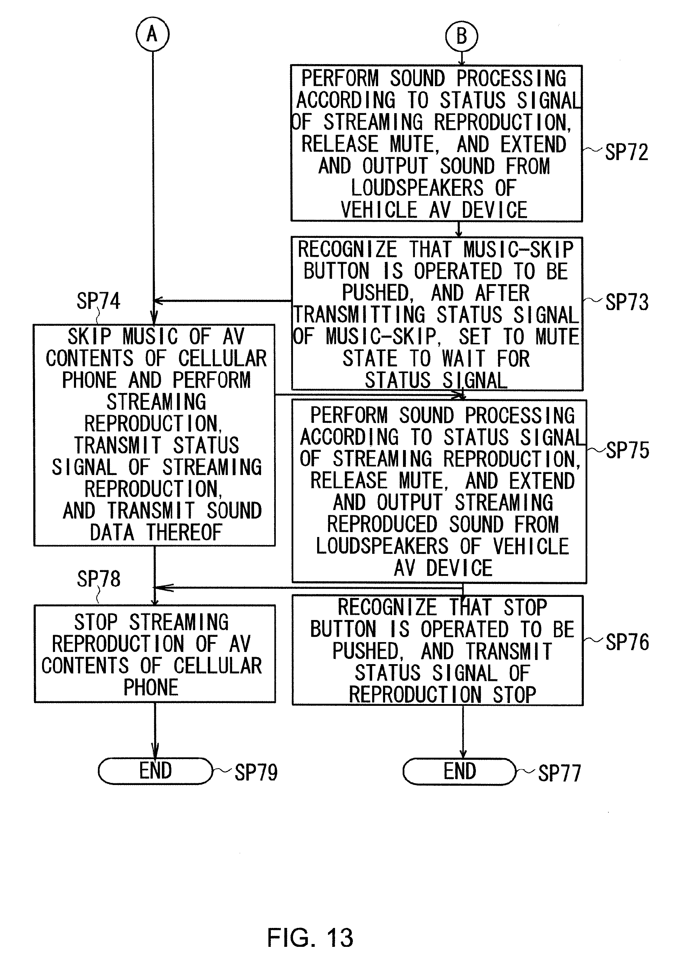

In the electronic device system 61 provided with the above-described basic configuration, as shown in FIG. 12 and FIG. 13, in step SP 61, when the control microcomputer 31 of the PND 63 recognizes that the AV contents streaming mode of the cellular phone 5 is selected by the user operation through the touch panel input unit 34, the processing goes to next step SP62.

In step SP62, the control microcomputer 31 of the PND 63 establishes the communication link with the cellular phone 5, and reads out an AV contents list held in the cellular phone 5, and stores the list in the memory 36 once, and then the processing goes to next step SP63.

In step SP63, since the communication link with the cellular phone 5 is established, the control microcomputer 31 of the PND 63 transmits an initial status signal indicative of this communication link establishment to the vehicle AV device 62 through the communication line terminal T3 of the PIN cable 4, and then the processing goes to next step SP64.

In step SP64, since the initial status signal indicating that the communication link with the cellular phone 5 is established is received from the PND 63, the control microcomputer 21 of the vehicle AV device 62 switches the mode to a key input mode under which AV contents streaming reproduction of the cellular phone 5 is operable using the operation button group 14 of the vehicle AV device 62 through the PND 63, and then the processing goes to next step SP65.

In step SP65, when recognizing that the button operation to display the AV contents list held in the cellular phone 5 on the display 33 of the PND 63 is performed, the control microcomputer 21 of the vehicle AV device 62 transmits the status signal to the PND 63 through the communication line terminal T3 of the PIN cable 4, and then the processing goes to next step SP66.

In step SP66, in accordance with the status signal received from the control microcomputer 21 of the vehicle AV device 62, the control microcomputer 31 of the PND 63 displays the AV contents list read out from the cellular phone 5 and stored in the memory 36 on the display 33, and then the processing goes to next step SP67.

In step SP67, when recognizing that the finger grip 14A of the operation button group 14 is operated to be rotated, the control microcomputer 21 of the vehicle AV device 62 transmits a status signal indicative of the rotation amount when the finger grip 14A is operated to be rotated to the PND 63 through the communication line terminal T3 of the PIN cable 4, and then the processing goes to next step SP68.

In step SP68, in accordance with the status signal indicative of the rotation operation amount with respect to the finger grip 14A, which is received from the vehicle AV device 62, the control microcomputer 31 of the PND 63 switches the display subject of the AV contents list displayed on the display 33 by scrolling it, and then the processing goes to next step SP69.

In step SP69, of the AV contents list displayed on the display 33 of the PND 63, when recognizing AV contents selected and determined by the push operation with respect to the finger grip 14A of the vehicle AV device 62, the control microcomputer 21 of the vehicle AV device 62 transmits a status signal of the selection result to the PND 63 through the communication line terminal T3 of the PIN cable 4, and then the processing goes to next step SP70.

In step SP70, in accordance with the status signal of the selection result received from the vehicle AV device 62, the control microcomputer 31 of the PND 63 starts the streaming reproduction processing with respect to the AV contents of the cellular phone 5, receives the streaming data from the communication processing unit 32, and, when streaming reproduced image data is included in the streaming data, displays a streaming reproduced image based on the streaming reproduced image data on the display 33, and then the processing goes to next step SP71.

In step SP71, the control microcomputer 31 of the PND 63 transmits a status signal of the streaming reproduction indicating that a streaming reproduced image is displayed on the display 33 to the vehicle AV device 62 through the communication line terminal T3 of the PIN cable 4, and transmits streaming reproduced sound data included in the streaming data to the vehicle AV device 62 through the left channel audio terminal T1 and right channel audio terminal T2 of the PIN cable 4, and then the processing goes to next step SP72.

At this time, in step SP72, the control microcomputer 21 of the vehicle AV device 62 performs sound processing according to the status signal of the streaming reproduction with respect to the streaming reproduced sound data received from the PND 63, and, after releasing the mute processing, extends the streaming reproduced sound of AV contents to 4-ch to output thus extended streaming reproduced sound from the respective loudspeakers FL, FR, RL, and RR, and then the processing goes to next step SP73.

In step SP73, when a music-skip button of the operation button group 14 is operated to be pushed, the control microcomputer 21 of the vehicle AV device 62 transmits a status signal of the music-skip to the PND 63 through the communication line terminal T3 of the PIN cable 4, sets the state to the mute state, and waits for the next status signal from the PND 63, and then the processing goes to next step SP74.

In step SP74, in accordance with the status signal of the music-skip received from the vehicle AV device 62, the control microcomputer 31 of the PND 63 skips the music of the AV contents of the cellular phone 5, streaming-reproduces the next AV contents, and transmits a status signal of the streaming reproduction to the vehicle AV device 62 through the communication line terminal T3 of the PIN cable 4, and concurrently transmits the streaming reproduced sound data to the vehicle AV device 62 through the left channel audio terminal T1 and right channel audio terminal T2 of the PIN cable 4, and then the processing goes to next step SP75.

In step SP75, the control microcomputer 21 of the vehicle AV device 62 performs sound processing according to the status signal of the streaming reproduction with respect to the streaming reproduced sound data of the next AV contents received from the PND 63, and, after releasing the mute processing, extends the streaming reproduced sound of the AV contents to 4-ch to output thus extended streaming reproduced sound from the respective loudspeakers FL, FR, RL, and RR, and then the processing goes to next step SP76.

In step SP76, when recognizing that a stop button of the operation button group 14 is operated to be pushed, the control microcomputer 21 of the vehicle AV device 62 generates a status signal of stopping the reproduction and transmits the status signal to the PND 63 through the communication line terminal T3 of the PIN cable 4, and then the processing goes to next step SP77 to end the processing of the vehicle AV device 62.

At this time, in step SP78, in accordance with the status signal of stopping the reproduction received from the vehicle AV device 62, the control microcomputer 31 of the PND 63 stops streaming reproduction processing of AV contents by the cellular phone 5, and then the processing goes to next step SP79 to end the processing of the PND 63.

### (3-4) Operation and effect in third embodiment

In the above-described configuration, in the electronic device system 61, the vehicle AV device 62 and the PND 63 are connected to each other through the PIN cable 4 so that mutual communication is possible, and, when the communication link between the PND 63 and the cellular phone 5 is established, an initial status signal of the communication link establishment is transmitted from the PND 63 to the vehicle AV device 62, and the control microcomputer 21 of the vehicle AV device 62 is made to recognize the initial status signal, which can switch the mode to a key input mode under which AV contents streaming reproduction of the cellular phone 5 is operable using the operation button group 14 of the vehicle AV device 62.

That is, in the electronic device system 61, the cellular phone 5 can be operated externally using the operation button group 14 of the vehicle AV device 62, and a command to display the AV contents list held in the cellular phone 5 on the display 33 of the PND 63 can be input by the user instead through the operation button group 14 of the vehicle AV device 62, with which the button operation is easily performed, without operating the cellular phone 5.

At this time, the control microcomputer 31 of the PND 63 receives a status signal to display the AV contents list from the vehicle AV device 62, and, by recognizing the status signal, when the communication link between the PND 63 and the cellular phone 5 is established, the AV contents list which has been read out from the cellular phone 5 to be stored in the memory 36 previously can be displayed on the display 33.

That is, in accordance with a command from the vehicle AV device 62, the control microcomputer 31 of the PND 63 displays the AV contents list of the cellular phone 5 on the display 33 instead whose screen size is larger than that of the cellular phone 5, which can significantly improve the visibility of the user with respect to the AV contents list.

Then, by transmitting a status signal which is obtained when the user selects AV contents desired to be streaming-reproduced by operating the finger grip 14A of the vehicle AV device 62 from among the AV contents list displayed on the display 33 of the PND 63 to the PND 63, the control microcomputer 21 of the vehicle AV device 62 can make the cellular phone 5 execute streaming-reproducing AV contents through the PND 63.

Then, by transmitting a status signal indicative of the streaming reproduction to the vehicle AV device 62, the control microcomputer 31 of the PND 63 can make the vehicle AV device 62 perform the preparation to output streaming reproduced sound.

When receiving streaming reproduced sound data from the PND 63, the control microcomputer 21 of the vehicle AV device 62 extends the streaming reproduced sound of AV contents to 4-ch and outputs thus extended reproduced sound from the respective loudspeakers FL, FR, RL, and RR.

In this way, in the electronic device system 61, the vehicle AV device 2 is made to perform the AV contents streaming reproduction operation with respect to the cellular phone 5 instead, the PND 63 is made to perform displaying the AV contents instead, and the respective loudspeakers FL, FR, RL, and RR of the vehicle AV device 62 are made to extend and output the streaming reproduced sound when the streaming reproduction is performed instead, which can perform the streaming reproduction processing by the cellular phone 5 instead by the mutual cooperation of the vehicle AV device 62 and PND 63.

Under the above-described configuration, in the electronic device system 61, various status signals are sent and received between the vehicle AV device 62 and the PND 63, and, by making the respective functions cooperate with each other, a user interface which combines the mutual functions of the respective devices can be obtained without employing the mutual relationship of the master and slave, and the streaming reproduction function of the cellular phone 5 can be realized with desired operability using the vehicle AV device 62 and PND 63.

Furthermore, in the electronic device system 61, while the vehicle AV device 62 is attached to be fixed to a predetermined position or the supply opening of an air conditioner arranged in the space inside the vehicle, or the lower part of an air conditioner operation panel, where the driver turns his eyes away from the driving visual line, the PND 63 is attached to an arbitrary position in the space inside the vehicle, where the driver does not turn his eyes away from the driving visual line largely, using an adhesive disc, the vehicle AV device 62 and PND 63 are made to mutually cooperate with each other, the AV contents list of the cellular phone 5 is displayed through the display 33 of the PND 63, and AV contents to be reproduced can be selected from among the AV contents list, which can execute the streaming reproduction processing by the cellular phone 5 without making the driver turn his eyes away from the driving visual line.

### (4) Fourth Embodiment

### (4-1) Overall configuration of electronic device system in fourth embodiment

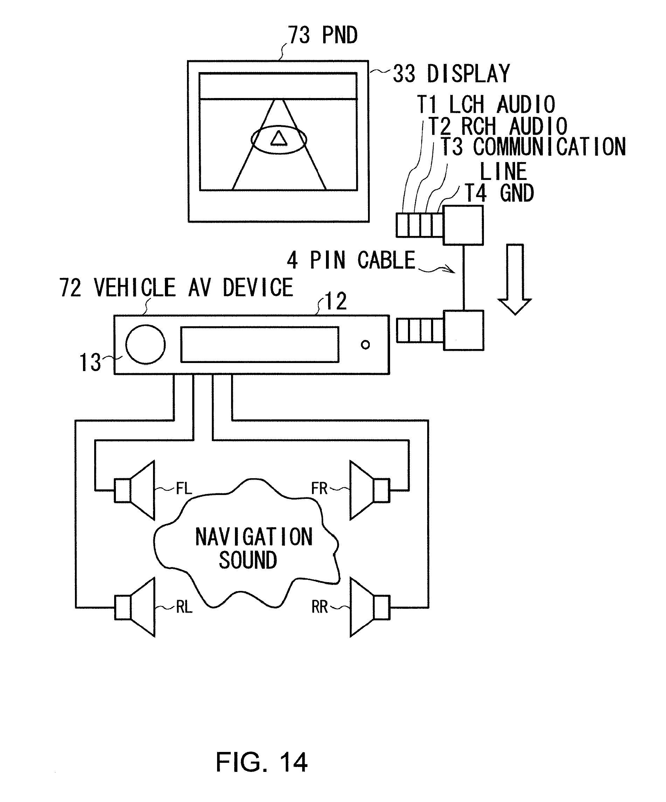

In FIG. 14, in which parts or components similar to those in FIG. 1 are indicated with the same reference numerals, a reference numeral "71" represents an electronic device system in the fourth embodiment. To a vehicle AV device 72 which is arranged in a space inside a vehicle, a PND 73 is connected mutually through the PIN cable 4.

The PIN cable 4 has the left channel audio terminal T1, right channel audio terminal T2, communication line terminal T3, and ground terminal T4. Through the communication line terminal T3, various commands and status signals are sent and received between the vehicle AV device 72 and the PND 73, and, through the left channel audio terminal T1 and right channel audio terminal T2, sound data supplied from the PND 73 is transmitted to the vehicle AV device 72.

When mounted to a vehicle (not shown), due to the spatial restriction inside the vehicle, the vehicle AV device 72 has its most part of the main body 12 thereof built in the dashboard, and is attached such that only the front panel 13 thereof is exposed to the outside of the dashboard. The configuration of the front panel 13 is similar to that of the vehicle AV device 2 in the first embodiment, and the explanation of which is omitted here.

The vehicle AV device 72 is also connected to the front left loudspeaker FL, front right loudspeaker FR, rear left loudspeaker RL, and rear right loudspeaker RR, which are arranged at the four corners of the space inside the vehicle, and outputs CD reproduced sound, DVD reproduced sound, radio broadcasting sound, etc.

In the electronic device system 71, when the vehicle AV device 72 and PND 73 are connected mutually by the PIN cable 4, and the route navigation to the destination is started by the PND 73, a navigation image is displayed on the display 33 of the PND 73, and navigation sound is extended to 4-ch to be output from the respective loudspeakers FL, FR, RL, and RR of the vehicle AV device 72.

Next, the circuit configuration of the electronic device system 71, in which the navigation sound from the PND 73 is extended to 4-ch to be output from the respective loudspeakers FL, FR, RL, and RR of the vehicle AV device 72 when the vehicle AV device 72 and PND 73 are connected mutually by the PIN cable 4 will be explained.

### (4-2) Circuit configuration of electronic device system in fourth embodiment

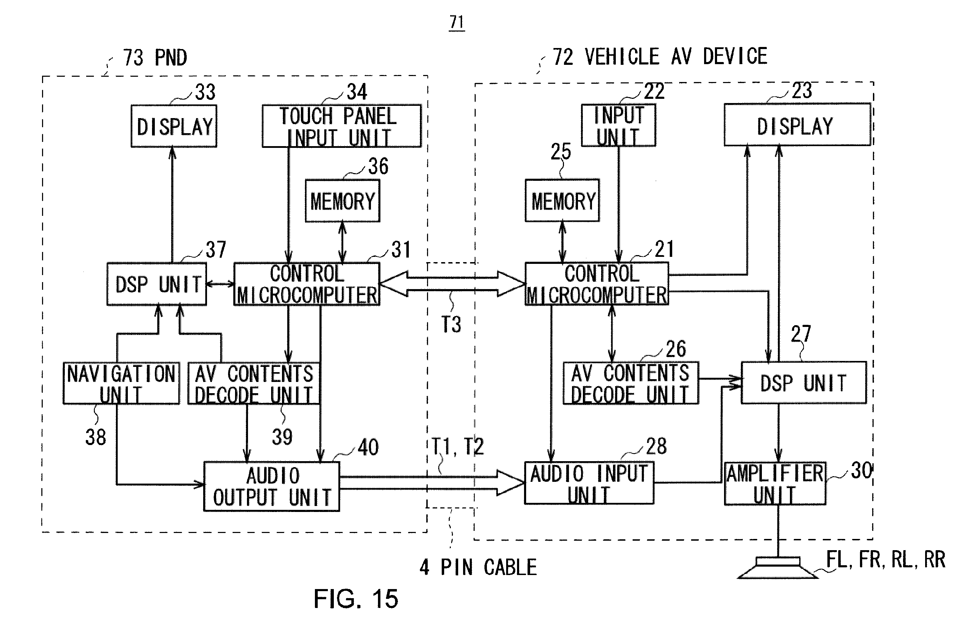

As shown in FIG. 15, in which parts or components similar to those in FIG. 3 are indicated with the same reference numerals, in the vehicle AV device 72 of the electronic device system 71, similar to the vehicle AV device 2 shown in FIG. 3 in the first embodiment, the control microcomputer 21 configured by a CPU operates in accordance with a basic program and an application program stored in the memory 25 to control the entire device and executes various processing.

Actually, in the vehicle AV device 72, the input unit 22 accepts a command which is input by the user through the operation button group 14 and finger grip 14A, and sends the command to the control microcomputer 21.

With respect to sound data which is obtained by performing CD reproduction processing or DVD reproduction processing in the AV contents decode unit 26 in accordance with the command, the control microcomputer 21 of the vehicle AV device 72 makes the DSP unit 27 perform predetermined digital signal processing, and makes the amplifier unit 30 amplify thus obtained sound data to a predetermined level and then perform the digital-to-analog conversion for thus amplified sound data, and outputs resulting data from the front left loudspeaker FL, front right loudspeaker FR, rear left loudspeaker RL, and rear right loudspeaker RR as CD reproduced sound or DVD reproduced sound.

At this time, when the AV contents decode unit 26 performs the CD reproduction processing, the control microcomputer 21 of the vehicle AV device 72 displays the music title, artist name, reproduction elapsed time, etc. of reproduced music of CD on the display 23, and, when the AV contents decode unit 26 performs the DVD reproduction processing, the control microcomputer 21 displays the chapter number, DVD reproduction elapsed time, and DVD reproduction remaining time, etc. on the display 23.

On the other hand, also in the PND 73, similar to the PND 3 shown in FIG. 3 in the first embodiment, the control microcomputer 31 configured by a CPU operates in accordance with a basic program and an application program stored in the memory 36 to control the entire device and executes various processing.

The PND 73 has the AV contents decode unit 39. The PND 73 makes the AV contents decode unit 39 decode AV contents stored in the memory 36 previously, displays thus obtained reproduced image data of AV contents on the display 33 through the DSP unit 37 as a reproduced image, and outputs the reproduced sound data of AV contents from loudspeakers (not shown) arranged on the PND 73 itself through the audio output unit 40 as reproduced sound.

The control microcomputer 21 of the vehicle AV device 72 is supplied with a parking brake detection signal from the vehicle. When the control microcomputer 21 is not supplied with a parking brake detection signal, that is, when the parking brake is released, a status signal which prohibits reflecting an image of AV contents on the display 33 of the PND 73 is transmitted to the control microcomputer 31 of the PND 73, and the vehicle AV device 72 controls displaying a reproduced image of AV contents by the PND 73.

Furthermore, the control microcomputer 31 of the PND 73 accepts a command which is input through the touch panel input unit 34. With respect to navigation image data which is obtained by making the navigation unit 38 operate according to the command, the control microcomputer 31 makes the DSP unit 37 perform predetermined digital signal processing, and displays thus obtained navigation image on the display 33.

At this time, the control microcomputer 31 of the PND 73 outputs navigation sound data, which is obtained by making the navigation unit 38 operate, from loudspeakers (not shown) arranged on the PND 73 itself through the audio output unit 40, and transmits the navigation sound data to the vehicle AV device 72 from the audio output unit 40 through the left channel audio terminal T1 and right channel audio terminal T2 of the PIN cable 4.

At this time, the control microcomputer 21 of the vehicle AV device 72 extends the navigation sound data received from the PND 73 through the audio input unit 28 to 4-ch and outputs the extended sound data from the front left loudspeaker FL, front right loudspeaker FR, rear left loudspeaker RL, and rear right loudspeaker RR through the DSP unit 27 and amplifier unit 30 as the navigation sound at the time of the route navigation operation.

Next, the navigation sound extension processing procedure in thus configured electronic device system 71, in which the control microcomputer 21 of the vehicle AV device 72 and the control microcomputer 31 of the PND 73 operate in cooperation with each other in accordance with a shared processing program, and the navigation sound which is obtained when the navigation is performed by the PND 73 is extended to 4-ch to be output from the respective loudspeakers FL, FR, RL, and RR of the vehicle AV device 72 will be explained hereinafter.

### (4-3) Sound extension processing procedure of electronic device system in fourth embodiment

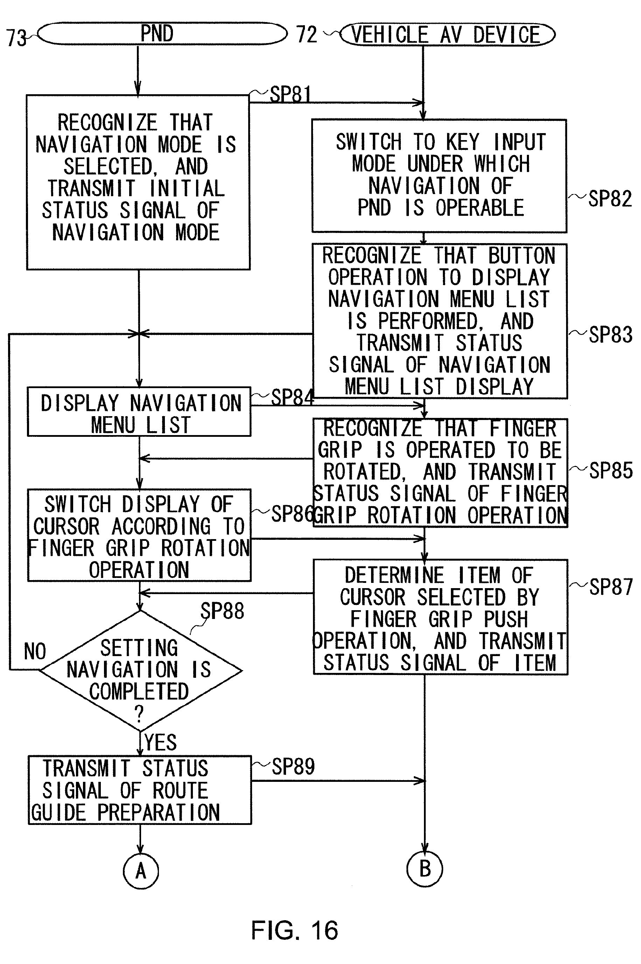

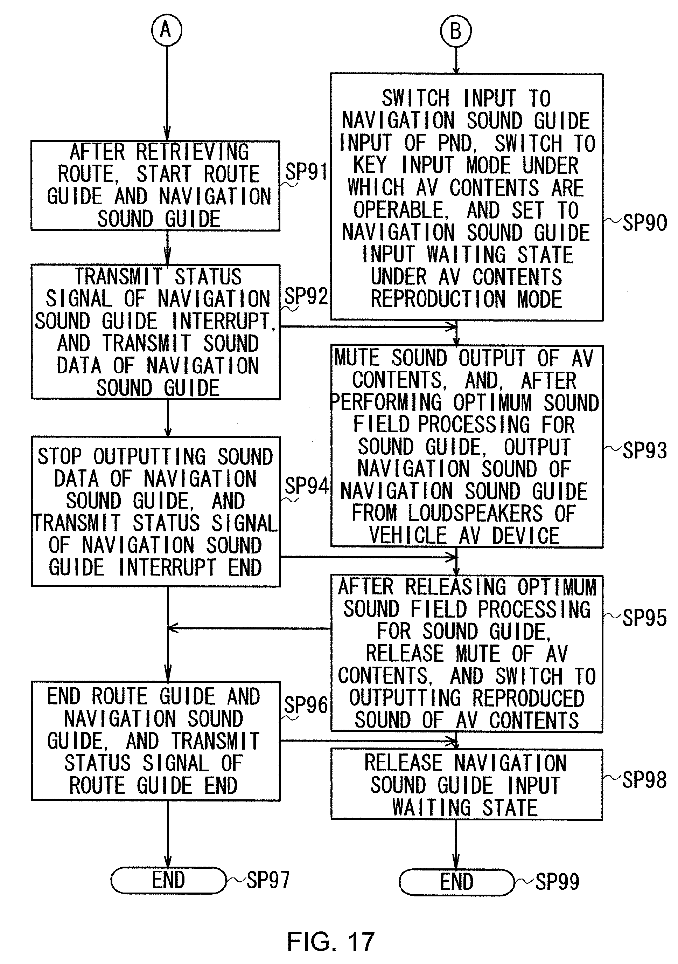

In the electronic device system 71 provided with the above-described basic configuration, as shown in FIG. 16 and FIG. 17, in step SP 81, when the control microcomputer 31 of the PND 73 recognizes that the navigation mode is selected by the user operation, an initial status signal of the navigation mode is transmitted to the vehicle AV device 72 through the communication line terminal T3 of the PIN cable 4, and the processing goes to next step SP82.

In step SP82, when the initial status signal of the navigation mode is received from the PND 73, the control microcomputer 21 of the vehicle AV device 72 switches the mode to a key input mode under which the navigation of the PND 73 is operable using the operation button group 14 of the vehicle AV device 72, and then the processing goes to next step SP83.

In step SP83, when recognizing that the button operation to display a navigation menu list of the PND 73 on the display 33 of the PND 73 is performed, the control microcomputer 21 of the vehicle AV device 72 transmits a status signal of this navigation menu list display to the PND 73 through the communication line terminal T3 of the PIN cable 4, and then the processing goes to next step SP84.

In step SP84, in accordance with the status signal of the navigation menu list display received from the control microcomputer 21 of the vehicle AV device 72, the control microcomputer 31 of the PND 73 reads out the navigation menu list stored in the memory 36 previously, and displays thus read out navigation menu list on the display 33, and then the processing goes to next step SP85.

In step SP85, when recognizing that the finger grip 14A of the operation button group 14 is operated to be rotated by the user who checks the navigation menu list with eyes, the control microcomputer 21 of the vehicle AV device 72 transmits a status signal indicative of the rotation operation amount of the finger grip 14A to the PND 73 through the communication line terminal T3 of the PIN cable 4, and then the processing goes to next step SP86.

In step SP86, the control microcomputer 31 of the PND 73 switches the display point of the cursor with respect to the navigation menu list displayed on the display 33 according to the status signal indicative of the rotation operation amount of the finger grip 14A, and then the processing goes to next step SP87.

In step SP87, the control microcomputer 21 of the vehicle AV device 72 determines a menu item represented by the cursor which is selected according to the push operation of the finger grip 14A, and transmits a status signal of the menu item to the PND 73 through the communication line terminal T3 of the PIN cable 4, and then the processing goes to next step SP88.

In step SP88, the control microcomputer 31 of the PND 73 determines whether or not the setting of the navigation operation is completed in accordance with the status signal of the menu item, and the processing returns to step SP84 to repeat the above-described processing when a negative result is obtained, while the processing goes to next step SP89 when a positive result is obtained.

In step SP89, since the setting of the navigation operation is completed, the control microcomputer 31 of the PND 73 transmits a status signal of the route guide preparation to the vehicle AV device 72 through the communication line terminal T3 of the PIN cable 4, and then the processing goes to next step SP90.

In step SP90, in accordance with the status signal of the route guide preparation received from the PND 73, the control microcomputer 21 of the vehicle AV device 72 switches the audio input unit 28 to the navigation sound guide input by the PND 73, switches the operation button group 14 to a key input mode under which the AV contents are operable, and sets the state to the navigation sound guide input waiting state under the AV contents reproduction mode, and then the processing goes to next step SP93.

At this time, in step SP91, since the status signal of the route guide preparation is transmitted, after retrieving the route to the destination, the control microcomputer 31 of the PND 73 starts the route guide to display a navigation image on the display 33, and starts the navigation sound guide, and then the processing goes to next step SP92.

In step SP92, the control microcomputer 31 of the PND 73 transmits a status signal of a navigation sound guide interrupt with the timing of performing the navigation sound guide such as "Turn to the left at the next intersection!" to the vehicle AV device 72 through the communication line terminal T3 of the PIN cable 4, and transmits sound data of the navigation sound guide to the vehicle AV device 72 through the left channel audio terminal T1 and right channel audio terminal T2 of the PIN cable 4, and then the processing goes to next step SP93.

In step SP93, in accordance with the status signal of the navigation sound guide interrupt received from the PND 73, the control microcomputer 21 of the vehicle AV device 72 mutes the reproduced sound of AV contents which are being output, and, after performing the optimum sound field processing for the navigation sound guide, extends the navigation sound of the navigation sound guide to 4-ch and outputs the extended sound from the respective loudspeakers FL, FR, RL, and RR of the vehicle AV device 72, and then the processing goes to next step SP94.

In step SP94, when output of sound data of the navigation sound guide is ended, the control microcomputer 31 of the PND 73 transmits a status signal of the navigation sound guide interrupt end to the vehicle AV device 72 through the communication line terminal T3 of the PIN cable 4, and then the processing goes to next step SP95.

In step SP95, in accordance with the status signal of the navigation sound guide interrupt end received from the PND 73, the control microcomputer 21 of the vehicle AV device 72 releases the optimum sound field processing for the navigation sound guide, releases the muting with respect to the reproduced sound of AV contents, and performs switching so that the reproduced sound of AV contents is output from the respective loudspeakers FL, FR, RL, and RR again, and then the processing goes to next step SP96.

In step SP96, when getting to the destination and the route guide is ended, the navigation sound guide is also ended, and the control microcomputer 31 of the PND 73 transmits a status signal of the route guide end to the vehicle AV device 72 through the communication line terminal T3 of the PIN cable 4, and then the processing goes to next step SP97, ending the processing of the PND 73.

On the other hand, in step SP98, in accordance with the status signal of the route guide end received from the PND 73, the control microcomputer 21 of the PND 73 releases the navigation sound guide input waiting state set in step SP 90 to return the state to the state before the navigation mode, and then the processing goes to next step SP99, ending the processing of the vehicle AV device 72.

### (4-4) Operation and effect in fourth embodiment

In the above-described configuration, in the electronic device system 71, when the vehicle AV device 72 and the PND 73 are connected to each other through the PIN cable 4 so that mutual communication is possible, the PND 73 transmits the initial status signal of the navigation mode to the vehicle AV device 72, and the control microcomputer 21 of the vehicle AV device 72 is made to recognize the initial status signal of the navigation mode, which can switch the mode to a key input mode under which the navigation with respect to the PND 73 is operable using the operation button group 14 of the vehicle AV device 72.

That is, in the electronic device system 71, the navigation function of the PND 73 can be operated externally using the operation button group 14 of the vehicle AV device 72, and setting of the navigation operation by the PND 73 is performed to start the route guide, which can display the navigation image on the display 33.

On the other hand, in the electronic device system 71, the navigation sound which is performing the route guide is input through the audio input unit 28 of the vehicle AV device 72 in accordance with the status signal of the navigation sound guide interrupt to be transmitted from the PND 73 to the vehicle AV device 72, and, after performing the optimum sound field processing for the navigation sound guide, the navigation sound is extended to 4-ch to be output from the respective loudspeakers FL, FR, RL, and RR connected to the vehicle AV device 72.

That is, in the electronic device system 71, while the navigation image when performing the route guide using the PND 73 is displayed on the display 33 of the PND 73, the navigation sound is output not from loudspeakers of the PND 73 but from the respective loudspeakers FL, FR, RL, and RR of the vehicle AV device 72 in the state of being extended to 4-ch with high quality.

In this way, in the electronic device system 71, while the navigation image when performing the route guide using the PND 73 is displayed on the display 33 of the PND 73, the navigation sound can be output from the respective loudspeakers FL, FR, RL, and RR of the vehicle AV device 72 instead in the state of being extended to 4-ch.

Under the above-described configuration, in the electronic device system 71, various status signals are sent and received between the vehicle AV device 72 and the PND 73 mutually, and, by making the respective functions cooperate with each other, a user interface which combines the mutual functions of the respective devices can be obtained without employing the mutual relationship of the master and slave. By making the respective loudspeakers FL, FR, RL, and RR of the vehicle AV device 72 perform the navigation sound output of the PND 73 instead, the navigation sound extension processing of the PND 73 can be executed with desired operability.

Furthermore, in the electronic device system 71, the PND 73 is attached to an arbitrary position in the space inside the vehicle, where the driver does not turn his eyes away from the driving visual line largely, using an adhesive disc. The vehicle AV device 72 and PND 73 are made to mutually cooperate with each other. The navigation menu list is displayed through the display 33 of the PND 73. Further, the menu item can be selected from the vehicle AV device 72 side. Thus, the setting of the navigation operation can be executed by performing only two operations, or operating to rotate the finger grip 14A of the vehicle AV device 72 and pushing the finger grip 14A, without making the driver concentrate on the operation of pushing an arbitrary part of the touch panel input unit 34 of the PND 73.

### (5) Fifth Embodiment

### (5-1) Overall configuration of electronic device system in fifth embodiment

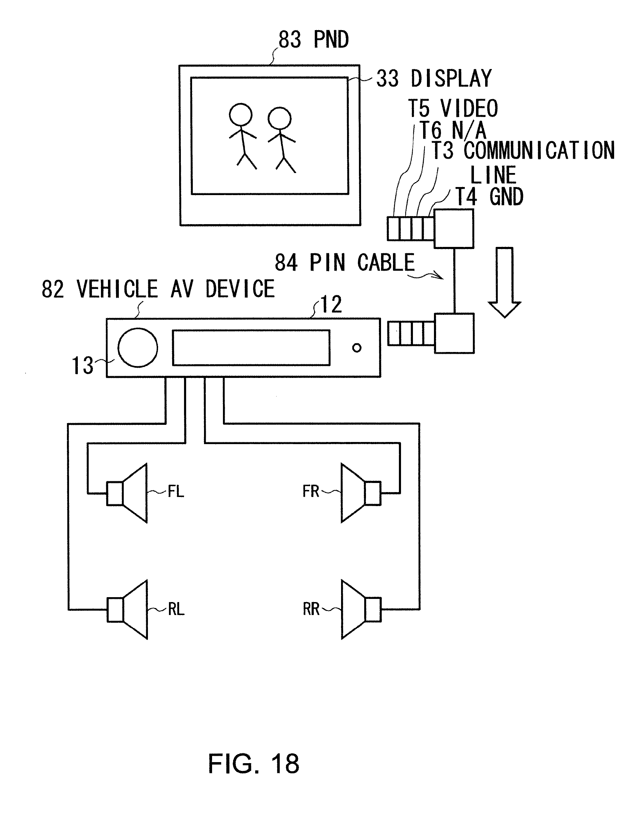

In FIG. 18, in which parts or components similar to those in FIG. 1 are indicated with the same reference numerals, a reference numeral "81" represents an electronic device system in the fifth embodiment. To a vehicle AV device 82 which is arranged in a space inside a vehicle, a PND 83 is connected through a PIN cable 84.

While the PIN cable 84 is tetrapolar similar to the PIN cable 4 shown in FIG. 1, other than the communication line terminal T3 and ground terminal T4, instead of the left channel audio terminal T1 and right channel audio terminal T2, a video terminal T5 and an N/A (Non Assignment) terminal T6 are arranged. Through the communication line terminal T3, various commands and status signals are sent and received between the vehicle AV device 82 and the PND 83, and, through the video terminal T5, reproduced image data of AV contents which is reproduced by the vehicle AV device 82 is transmitted to the PND 83.

When mounted to a vehicle (not shown), due to the spatial restriction inside the vehicle, the vehicle AV device 82 has its most part of the main body 12 thereof built in the dashboard, and is attached such that only the front panel 13 thereof is exposed to the outside of the dashboard. The configuration of the front panel 13 is similar to that of the vehicle AV device 2 in the first embodiment, and the explanation of which is omitted here.

The vehicle AV device 82 is also connected to the front left loudspeaker FL, front right loudspeaker FR, rear left loudspeaker RL, and rear right loudspeaker RR, which are arranged at the four corners of the space inside the vehicle, and outputs CD reproduced sound, DVD reproduced sound, radio broadcasting sound, etc.

In the electronic device system 81, when the vehicle AV device 82 and PND 83 are connected mutually by the PIN cable 84, reproduced sound of AV contents held in the vehicle AV device 82 is output from the respective loudspeakers FL, FR, RL, and RR connected to the vehicle AV device 82, and reproduced image of AV contents is transmitted to the PND 83 to be displayed on the display 33 thereof.

Next, the circuit configuration of the electronic device system 81, in which the reproduced image of AV contents held in the vehicle AV device 82 is displayed on the display 33 of the PND 83 when the vehicle AV device 82 and PND 83 are connected mutually by the PIN cable 84 will be explained.

### (5-2) Circuit configuration of electronic device system in fifth embodiment

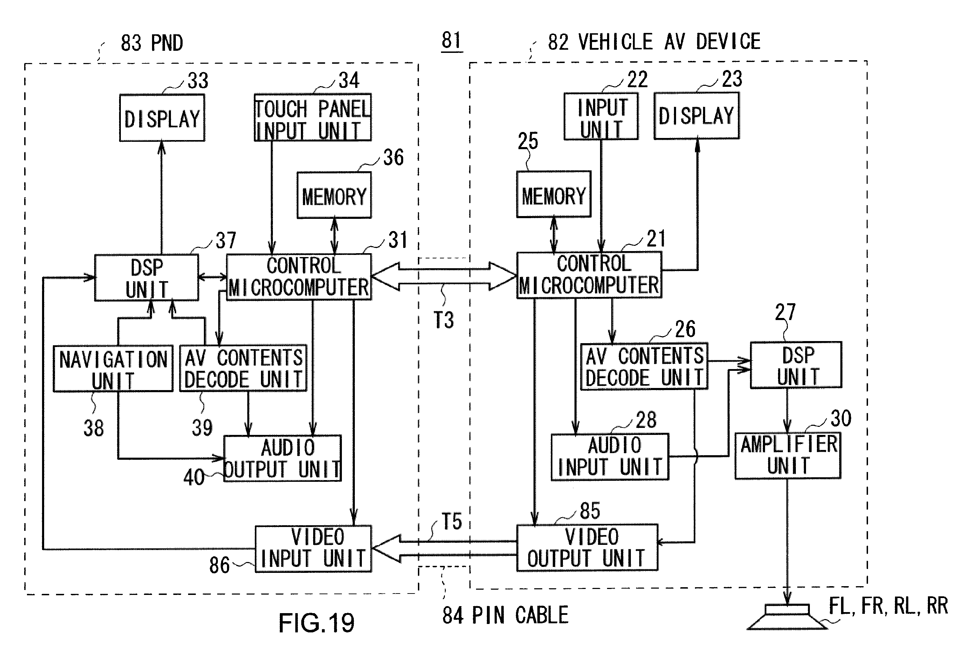

As shown in FIG. 19, in which parts or components similar to those in FIG. 3 are indicated with the same reference numerals, in the vehicle AV device 82 of the electronic device system 81, similar to the vehicle AV device 2 shown in FIG. 3 in the first embodiment, the control microcomputer 21 configured by a CPU operates in accordance with a basic program and an application program stored in the memory 25 to control the entire device and executes various processing.

Actually, in the vehicle AV device 82, the input unit 22 accepts a command which is input by the user through the operation button group 14 and finger grip 14A, and sends the command to the control microcomputer 21.

With respect to sound data which is obtained by performing CD reproduction processing or DVD reproduction processing in the AV contents decode unit 26 in accordance with the command, the control microcomputer 21 of the vehicle AV device 82 makes the DSP unit 27 perform predetermined digital signal processing, makes the amplifier unit 30 amplify thus obtained sound data to a predetermined level and then perform the digital-to-analog conversion for thus amplified sound data, and outputs the resulting data from the front left loudspeaker FL, front right loudspeaker FR, rear left loudspeaker RL, and rear right loudspeaker RR as CD reproduced sound or DVD reproduced sound.

At this time, when the AV contents decode unit 26 performs the CD reproduction processing, the control microcomputer 21 of the vehicle AV device 82 displays the music title, artist name, reproduction elapsed time, etc. of reproduced music of CD on the display 23, and, when the AV contents decode unit 26 performs the DVD reproduction processing, the control microcomputer 21 displays the chapter number, DVD reproduction elapsed time, and DVD reproduction remaining time, etc. on the display 23.

On the other hand, also in the PND 83, similar to the PND 3 shown in FIG. 3 in the first embodiment, the control microcomputer 31 configured by a CPU operates in accordance with a basic program and an application program stored in the memory 36 to control the entire device and executes various processing.

The PND 83 has the AV contents decode unit 39, makes the AV contents decode unit 39 decode AV contents stored in the memory 36 previously, and displays thus obtained reproduced image of AV contents on the display 33 through the DSP unit 37, and also outputs the reproduced sound data of AV contents from loudspeakers (not shown) arranged on the PND 83 itself through the audio output unit 40.

Furthermore, the control microcomputer 31 of the PND 83 accepts a command which is input through the touch panel input unit 34. With respect to navigation image data which is obtained by making the navigation unit 38 operate according to the command, the control microcomputer 31 makes the DSP unit 37 perform predetermined digital signal processing, and displays thus obtained navigation image on the display 33.

At this time, the control microcomputer 31 of the PND 83 outputs navigation sound data, which is obtained by making the navigation unit 38 operate, from loudspeakers (not shown) arranged on the PND 83 itself through the audio output unit 40.

On the other hand, the control microcomputer 21 of the vehicle AV device 82 makes the AV contents decode unit 26 decode AV contents stored in the memory 25, and transmits thus obtained reproduced image data of AV contents to the PND 83 from a video output unit 85 through a video input unit 86.

The control microcomputer 31 of the PND 83 displays reproduced image data of AV contents input from the vehicle AV device 82 through the video input unit 86 on the display 33 through the DSP unit 37, which can make the user check the reproduced image of AV contents held in the vehicle AV device 82 with eyes through the display 33 of the PND 83.

The control microcomputer 21 of the vehicle AV device 82 is supplied with a parking brake detection signal from the vehicle. When the control microcomputer 21 is not supplied with a parking brake detection signal, that is, when the parking brake is released, a status signal which prohibits reflecting an image of AV contents on the display 33 of the PND 83 is transmitted to the control microcomputer 31 of the PND 83, and displays of a reproduced image of AV contents on the display 33 of the PND 83 is controlled.

At this time, the control microcomputer 21 of the vehicle AV device 82 extends the reproduced sound data of AV contents to 4-ch and outputs the extended sound data from the front left loudspeaker FL, front right loudspeaker FR, rear left loudspeaker RL, and rear right loudspeaker RR through the DSP unit 27 and amplifier unit 30 as the reproduced sound of AV contents.

Next, the vehicle AV contents image display processing procedure in thus configured electronic device system 81, in which the control microcomputer 21 of the vehicle AV device 82 and the control microcomputer 31 of the PND 83 operate in cooperation with each other in accordance with a shared processing program, and the reproduced sound of AV contents by the vehicle AV device 82 is output from the respective loudspeakers FL, FR, RL, and RR of itself, while the reproduced image of AV contents is displayed using the display 33 of the PND 83 will be explained hereinafter.

### (5-3) AV contents image display processing procedure of electronic device system in fifth embodiment

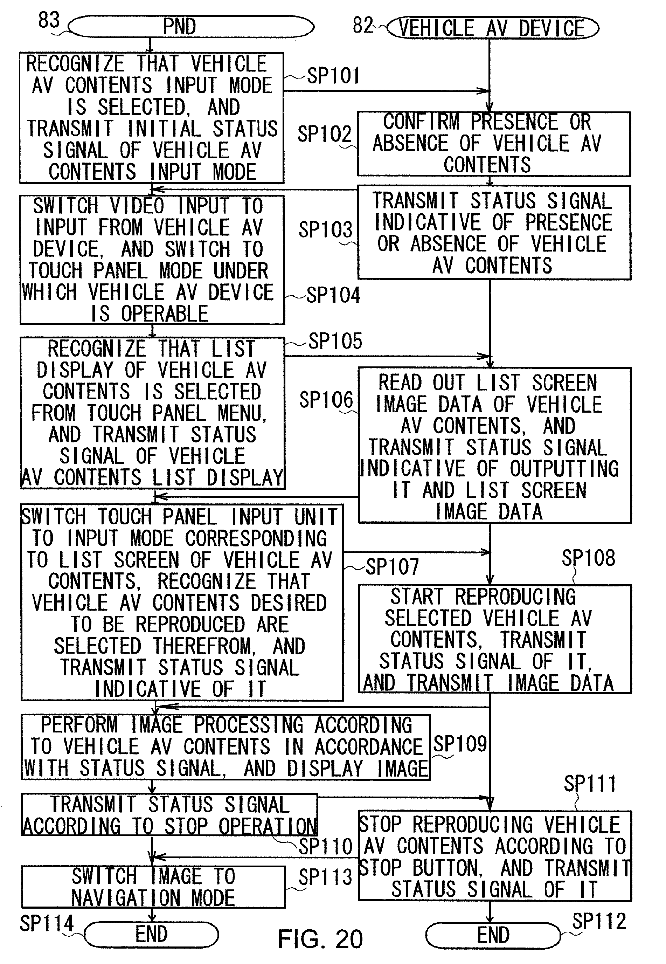

In the electronic device system 81 provided with the above-described basic configuration, as shown in FIG. 20, in step SP 101, when the control microcomputer 31 of the PND 83 recognizes that the vehicle AV contents input mode is selected by the user operation, an initial status signal of the vehicle AV contents input mode is transmitted to the vehicle AV device 82 through the communication line terminal T3 of the PIN cable 84, and the processing goes to next step SP102.

In step SP102, since the initial status signal of the vehicle AV contents input mode is received from the PND 83, the control microcomputer 21 of the vehicle AV device 82 confirms that vehicle AV contents are stored in the memory 25 of the vehicle AV device 82, and then the processing goes to next step SP103.

In step SP103, the control microcomputer 21 of the vehicle AV device 82 transmits a status signal indicative of the presence or absence of vehicle AV contents in the PND 83 to the PND 83 through the communication line terminal T3 of the PIN cable 84, and then the processing goes to next step SP104.

In step SP104, in accordance with the status signal received from the control microcomputer 21 of the vehicle AV device 82, the control microcomputer 31 of the PND 83 switches the video input unit 86 to the input from the vehicle AV device 82, and switches the mode to a touch panel mode under which the vehicle AV device is operable, and then the processing goes to next step SP105.

In step SP105, when recognizing that an item to display the list of vehicle AV contents is selected from the touch panel menu displayed on the display 33, the control microcomputer 31 of the PND 83 transmits a status signal of the vehicle AV contents list display to the vehicle AV device 82 through the communication line terminal T3 of the PIN cable 84, and then the processing goes to next step SP106.

In step SP106, the control microcomputer 21 of the vehicle AV device 82 reads out list screen image data of the vehicle AV contents from the memory 25, and transmits a status signal indicative of outputting of the list screen image data to the PND 83 through the communication line terminal T3 of the tetrapolar PIN cable 84, and also transmits the list screen image data to the PND 83 through the video terminal T5 of the tetrapolar PIN cable 84, and then the processing goes to next step SP107.

In step SP107, the control microcomputer 31 of the PND 83 switches the touch panel input unit 34 to the input mode corresponding to the list screen of the vehicle AV contents, and, when recognizing that vehicle AV contents which are desired to be reproduced are selected therefrom using the touch panel input unit 34, transmits a status signal indicative of the selection result to the vehicle AV device 82 through the communication line terminal T3 of the PIN cable 84, and then the processing goes to next step SP108.

In step SP108, in accordance with the status signal received from the PND 83, the control microcomputer 21 of the vehicle AV device 82 starts reproducing the selected vehicle AV contents, and transmits a status signal of the reproduction start to the PND 83 through the communication line terminal T3 of the PIN cable 84, and also transmits image data of the reproduced vehicle AV contents to the PND 83 through the video terminal T5 of the PIN cable 84, and then the processing goes to next step SP109.

The control microcomputer 21 of the vehicle AV device 82 outputs reproduced sound data of the vehicle AV contents, which is concurrently reproduced, from the respective loudspeakers FL, FR, RL, and RR through the DSP unit 27 and amplifier unit 30.

In step SP109, in accordance with the status signal of the reproduction start received from the vehicle AV device 82, the control microcomputer 31 of the PND 83 performs image processing according to the vehicle AV contents using the DSP unit 37, and displays thus obtained reproduced image of the vehicle AV contents on the display 33, and then the processing goes to next step SP110.

In step SP110, when recognizing that the stop operation is performed through the touch panel input unit 34, the control microcomputer 31 of the PND 83 transmits a status signal of the reproduction stop to the vehicle AV device 82 through the communication line terminal T3 of the PIN cable 84, and then the processing goes to next step SP111.

In step SP111, in accordance with the status signal of the reproduction stop received from the PND 83, the control microcomputer 21 of the vehicle AV device 82 stops the vehicle AV contents which are being reproduced, and transmits a status signal indicative of the stopping of the vehicle AV contents to the PND 83 through the communication line terminal T3 of the PIN cable 84, and then the processing goes to next step SP112, ending the processing of the vehicle AV device 82.

On the other hand, in step SP113, in accordance with the status signal of the vehicle AV contents reproduction stop received from the vehicle AV device 82, when recognizing that supply of the image data of the vehicle AV contents is ended, the control microcomputer 31 of the PND 83 switches the contents to be displayed on the display 33 to a navigation image of the original navigation mode, and then the processing goes to next step SP114, ending the processing of the PND 83.

### (5-4) Operation and effect in fifth embodiment

In the above-described configuration, in the electronic device system 81, when the vehicle AV device 82 and the PND 83 are connected to each other through the PIN cable 84 so that mutual communication is possible, the PND 83 transmits the initial status signal of the vehicle AV contents input mode to the vehicle AV device 82, and the control microcomputer 21 of the vehicle AV device 82 is made to recognize the initial status signal of the vehicle AV contents input mode, which can make the vehicle AV device 82 confirm the presence or absence of vehicle AV contents and the connection state with the PND 83.

That is, in the electronic device system 81, the PND 83 can confirm the presence or absence of vehicle AV contents and the connection state with the PND 83 in the vehicle AV device 82 by the external operation. Then, by the operation of the user with respect to the touch panel input unit 34, the PND 83 is supplied with the list screen of the vehicle AV contents held in the vehicle AV device 82, and can display the list screen on the display 33 of itself.

Then, the control microcomputer 31 of the PND 83 requests the vehicle AV device 82 to supply image data of vehicle AV contents which are selected from among the list screen of the vehicle AV contents, receives reproduced image data of vehicle AV contents supplied from the vehicle AV device 82 according to the request through the PIN cable 84, and can display the data on the display 33.

In this way, in the electronic device system 81, the reproduced sound of vehicle AV contents selected by the PND 83 is output from the respective loudspeakers FL, FR, RL, and RR of the vehicle AV device 82, while the reproduced image of vehicle AV contents can be displayed on the display 33 of the PND 83, which is supplied with the reproduced image, instead of the display 23 of the vehicle AV device 82.

Under the above-described configuration, in the electronic device system 81, various status signals are sent and received between the vehicle AV device 82 and the PND 83 mutually, and, by making the respective functions cooperate with each other, a user interface which combines the mutual functions of the respective devices can be obtained without employing the mutual relationship of the master and slave, and, by making the PND 83 display reproduced image with respect to the vehicle AV contents of the vehicle AV device 82 using the display 33, reproduced image by the vehicle AV device 82 can be displayed for the user as a display result which is excellent in visibility.

Furthermore, in the electronic device system 81, while the vehicle AV device 82 is attached to be fixed to a predetermined position or the supply opening of an air conditioner arranged in the space inside the vehicle, or the lower part of an air conditioner operation panel, where the driver turns his eyes away from the driving visual line, the PND 83 is attached to an arbitrary position in the space inside the vehicle, where the driver does not turn his eyes away from the driving visual line largely, using an adhesive disc, and the vehicle AV device 82 and PND 83 are made to mutually cooperate with each other. Further, the list screen of the vehicle AV contents of the vehicle AV device 82 is displayed through the display 33 of the PND 83. Accordingly, vehicle AV contents to be reproduced can be selected from among the list screen of the vehicle AV contents. Thus, desired vehicle AV contents can be reproduced without making the driver turn his eyes away from the driving visual line.

### (6) Sixth Embodiment

### (6-1) Overall configuration of electronic device system in sixth embodiment

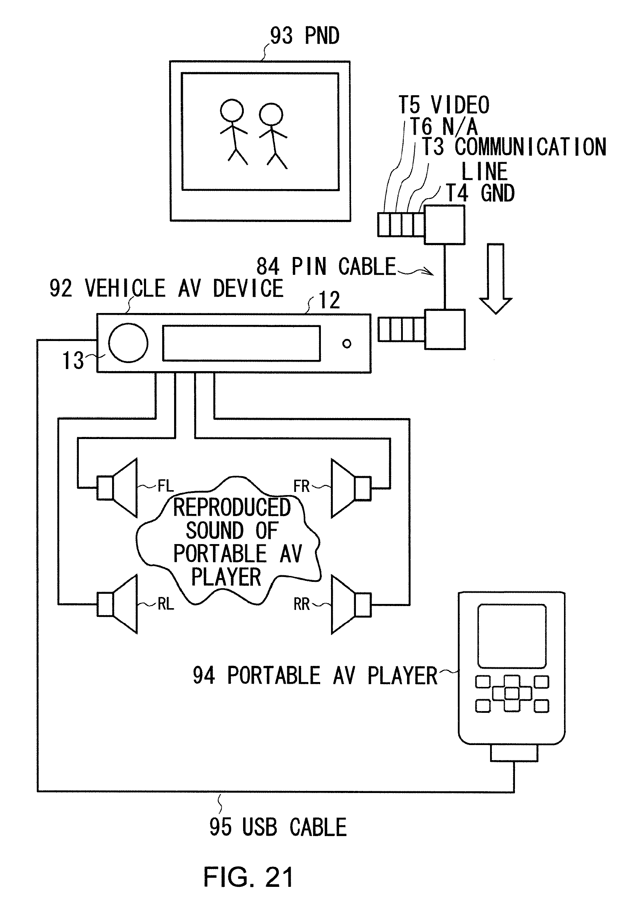

In FIG. 21, in which parts or components similar to those in FIG. 1 are indicated with the same reference numerals, a reference numeral "91" represents an electronic device system in the sixth embodiment. To a vehicle AV device 92 which is arranged in a space inside a vehicle, a PND 93 is connected through the PIN cable 84, and, to the vehicle AV device 92, a portable AV player 94 is connected by USB through a Universal Serial Bus (USB) cable 95.

The PIN cable 84 is similar to that shown in the fifth embodiment, and has the video terminal T5, N/A terminal T6, communication line terminal T3, and ground terminal T4, and, through the communication line terminal T3, various commands and status signals are sent and received between the vehicle AV device 92 and the PND 93, and, through the video terminal T5, reproduced image data of AV contents which is supplied from the vehicle AV device 92 is transmitted to the PND 93.

When mounted to a vehicle (not shown), due to the spatial restriction inside the vehicle, the vehicle AV device 92 has its most part of the main body 12 thereof built in the dashboard, and is attached such that only the front panel 13 thereof is exposed to the outside of the dashboard. The configuration of the front panel 13 is similar to that of the vehicle AV device 2 in the first embodiment, and the explanation of which is omitted here.

The vehicle AV device 92 is also connected to the front left loudspeaker FL, front right loudspeaker FR, rear left loudspeaker RL, and rear right loudspeaker RR, which are arranged at the four corners of the space inside the vehicle, and outputs CD reproduced sound, DVD reproduced sound, radio broadcasting sound, etc.

In the electronic device system 91, when the vehicle AV device 92 and PND 93 are connected mutually by the PIN cable 84, and the vehicle AV device 92 and portable AV player 94 are connected by USB, a reproduced image of AV contents which is reproduced by the portable AV player 94 is enlarged to be displayed by substituting the display 33 of the PND 93, and reproduced sound is extended to 4-ch to be output by substituting the respective loudspeakers FL, FR, RL, and RR of the vehicle AV device 92.

Next, the circuit configuration of the electronic device system 91, in which the reproduced image of AV contents by the portable AV player 94 is enlarged to be displayed on the display 33 of the PND 93, and the reproduced sound is extended to 4-ch to be output from the respective loudspeakers FL, FR, RL, and RR of the vehicle AV device 92 when the vehicle AV device 92 and PND 93 are connected mutually by the PIN cable 84, and the vehicle AV device 92 and portable AV player 94 are connected by USB will be explained.

### (6-2) Circuit configuration of electronic device system in sixth embodiment

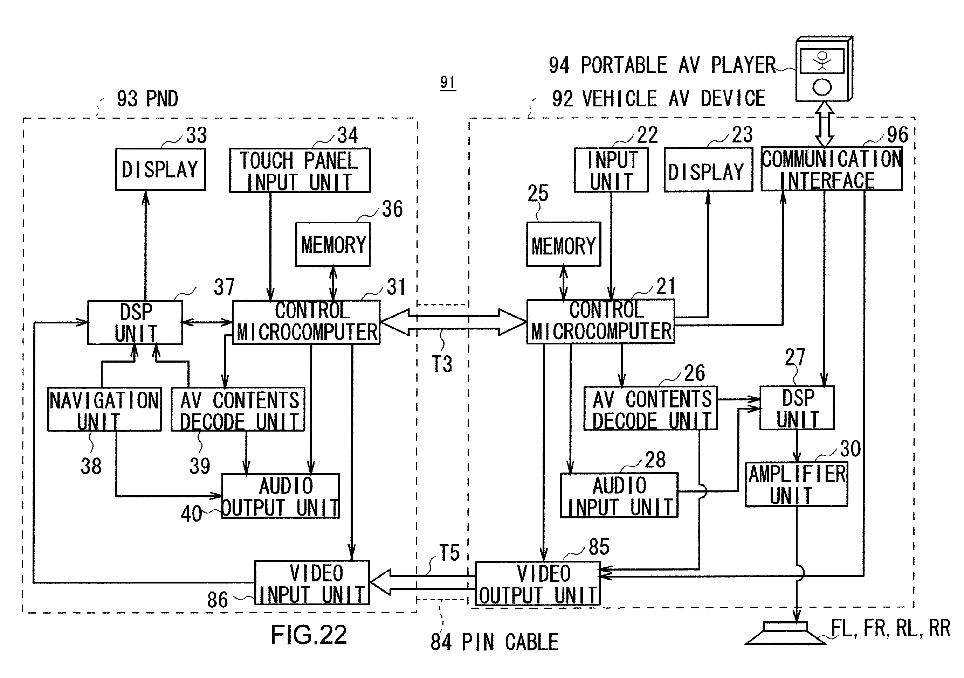

As shown in FIG. 22, in which parts or components similar to those in FIG. 3 are indicated with the same reference numerals, in the vehicle AV device 92 of the electronic device system 91, similar to the vehicle AV device 2 shown in FIG. 3 in the first embodiment, the control microcomputer 21 configured by a CPU operates in accordance with a basic program and an application program stored in the memory 25 to control the entire device and executes various processing.

Actually, in the vehicle AV device 92, the input unit 22 accepts a command which is input by the user through the operation button group 14 and finger grip 14A, and sends the command to the control microcomputer 21.

With respect to sound data which is obtained by performing CD reproduction processing or DVD reproduction processing in the AV contents decode unit 26 in accordance with the command, the control microcomputer 21 of the vehicle AV device 92 makes the DSP unit 27 perform predetermined digital signal processing, makes the amplifier unit 30 amplify thus obtained sound data to a predetermined level and then perform the digital-to-analog conversion for thus amplified sound data, and outputs resulting data from the front left loudspeaker FL, front right loudspeaker FR, rear left loudspeaker RL, and rear right loudspeaker RR as CD reproduced sound or DVD reproduced sound.

At this time, when the AV contents decode unit 26 performs the CD reproduction processing, the control microcomputer 21 of the vehicle AV device 92 displays the music title, artist name, reproduction elapsed time, etc. of reproduced music of CD on the display 23, and, when the AV contents decode unit 26 performs the DVD reproduction processing, the control microcomputer 21 displays the chapter number, DVD reproduction elapsed time, and DVD reproduction remaining time, etc. on the display 23.

On the other hand, also in the PND 93, similar to the PND 3 shown in FIG. 3 in the first embodiment, the control microcomputer 31 configured by a CPU operates in accordance with a basic program and an application program stored in the memory 36 to control the entire device and executes various processing.

The PND 93 has the AV contents decode unit 39. The PND 93 makes the AV contents decode unit 39 decode AV contents stored in the memory 36, displays thus obtained image of AV contents on the display 33 through the DSP unit 37, and outputs the sound data of AV contents from loudspeakers (not shown) arranged on the PND 93 itself through the audio output unit 40.

Furthermore, the control microcomputer 31 of the PND 93 accepts a command which is input through the touch panel input unit 34. With respect to navigation image data which is obtained by making the navigation unit 38 operate according to the command, the control microcomputer 31 makes the DSP unit 37 perform predetermined digital signal processing, and displays thus obtained navigation image on the display 33.

At this time, the control microcomputer 31 of the PND 93 outputs navigation sound data, which is obtained by making the navigation unit 38 operate, from loudspeakers (not shown) arranged on the PND 93 itself through the audio output unit 40.

On the other hand, the control microcomputer 21 of the vehicle AV device 92 takes in image data and sound data of AV contents reproduced by the portable AV player 94, which is connected by USB, using a communication interface 96, and outputs the image data to the PND 93 from the video output unit 85 through the video input unit 86.

The control microcomputer 31 of the PND 93 displays reproduced image data of AV contents input from the vehicle AV device 92 through the video input unit 86 on the display 33 through the DSP unit 37, and accordingly displays a reproduced image of AV contents held in the portable AV player 94 on the display 33 of the PND 93 through the vehicle AV device 92, which can make the user check the reproduced image with eyes as an enlarged reproduced image.

At this time, the control microcomputer 21 of the vehicle AV device 92 extends the reproduced sound data of AV contents by the PND 93, which is taken in from the communication interface 96, and outputs the extended sound data from the front left loudspeaker FL, front right loudspeaker FR, rear left loudspeaker RL, and rear right loudspeaker RR through the DSP unit 27 and amplifier unit 30 as 4-ch reproduced sound.

The control microcomputer 21 of the vehicle AV device 92 is supplied with a parking brake detection signal from the vehicle. When the control microcomputer 21 is not supplied with a parking brake detection signal, that is, when the parking brake is released, a status signal which prohibits reflecting a reproduced image of AV contents reproduced by the portable AV player 94 on the display 33 of the PND 93 is transmitted to the control microcomputer 31 of the PND 93, and display of a reproduced image of AV contents by the portable AV player 94 is controlled from the vehicle AV device 92.

Next, the image and sound output processing procedure of the portable AV player in thus configured electronic device system 91, in which the control microcomputer 21 of the vehicle AV device 92 and the control microcomputer 31 of the PND 93 operate in cooperation with each other in accordance with a shared processing program, and the reproduced image of AV contents reproduced by the portable AV player 94 is displayed on the display 33 of the PND 93, while the reproduced sound is extended to 4-ch to be output from the respective loudspeakers FL, FR, RL, and RR of the vehicle AV device 92 will be explained hereinafter.

### (6-3) Image and sound output processing procedure by portable AV player of electronic device system in sixth embodiment

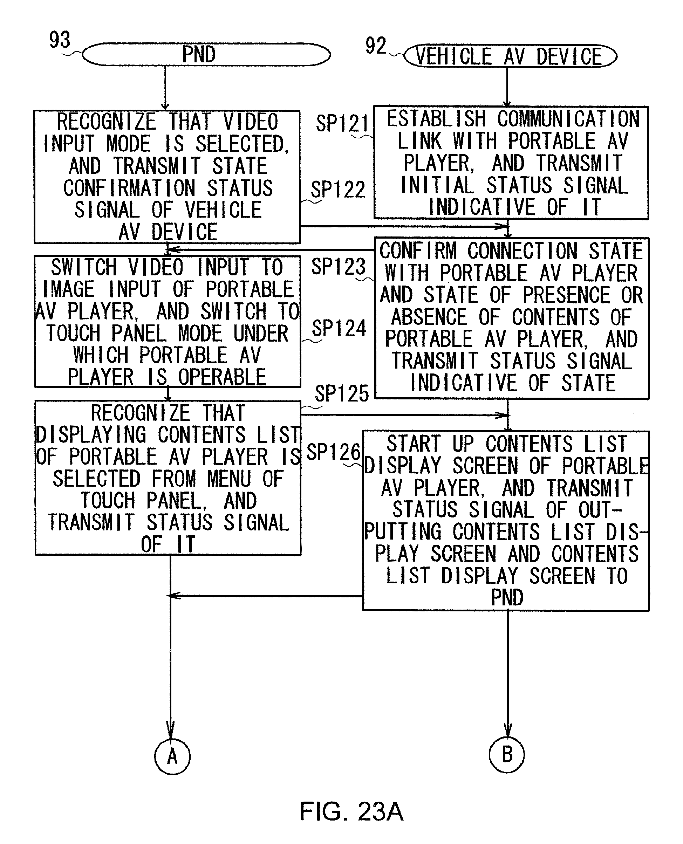

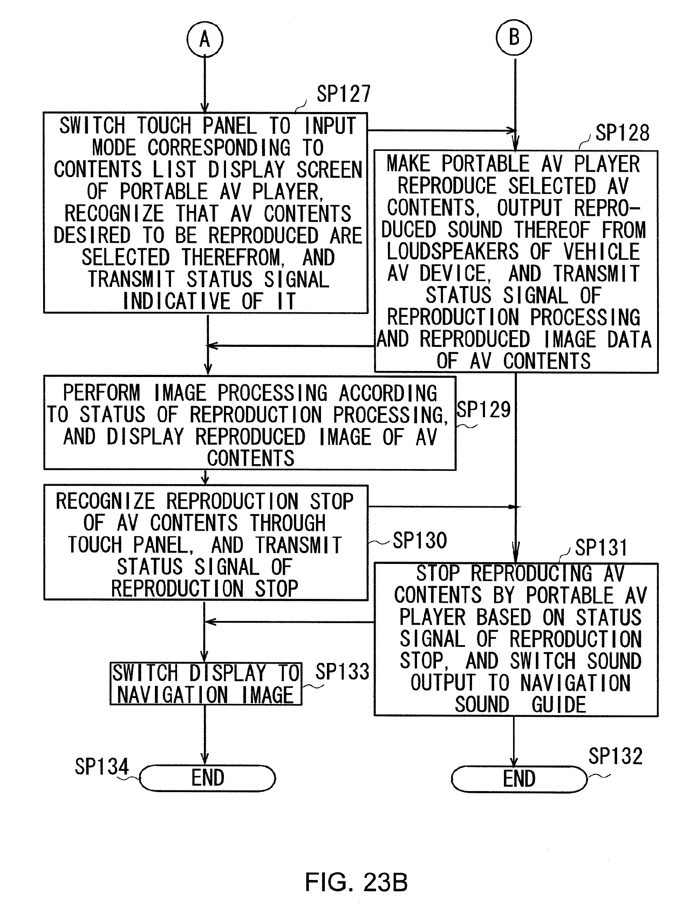

In the electronic device system 91 provided with the above-described basic configuration, when the vehicle AV device 92 and PND 93 cooperate with each other, and, as described in the fourth embodiment, while the navigation sound by the PND 93 is output from the respective loudspeakers FL, FR, RL, and RR of the vehicle AV device 92, after the communication link between the vehicle AV device 92 and portable AV player 94 is established by connecting the portable AV player 94 to the vehicle AV device 92 by USB as shown in FIGS. 23A AND 23B, in step SP121" the control microcomputer 21 of the vehicle AV device 92 transmits an initial status signal indicative of this communication link establishment to the PND 93 through the communication line terminal T3 of the PIN cable 84, and then the processing goes to next step SP122.

In step SP122, when recognizing that the AV contents input mode is selected based on the initial status signal received from the vehicle AV device 92, the control microcomputer 31 of the PND 93 generates a state confirmation status signal to confirm the state of the portable AV player 94, and transmits the state confirmation status signal to the vehicle AV device 92 through the communication line terminal T3 of the PIN cable 84, and then the processing goes to next step SP123.

In step SP123, in accordance with the state confirmation status signal received from the PND 93, the control microcomputer 21 of the vehicle AV device 92 confirms the connection state with the portable AV player 94 and the state of the presence or absence of AV contents of the portable AV player 94 etc., and transmits a status signal indicative of the state to the PND 93 through the communication line terminal T3 of the PIN cable 84, and then the processing goes to next step SP124.

In step SP124, in accordance with the status signal from the vehicle AV device 92, the control microcomputer 31 of the PND 93 switches the video input of the video input unit 86 to the image input of the portable AV player 94 output from the video output unit 85 of the vehicle AV device 92, and switches the mode to a touch panel mode under which the portable AV player is operable, and then the processing goes to next step SP125.

In step SP125, when recognizing that an item to display the contents list of the portable AV player 94 is selected from the menu of the touch panel, the control microcomputer 31 of the PND 93 transmits a status signal of the contents list display to the vehicle AV device 92 through the communication line terminal T3 of the PIN cable 84, and then the processing goes to next step SP126.

In step SP126, the control microcomputer 21 of the vehicle AV device 92 starts up and reads out the contents list display screen of the portable AV player 94, and transmits a status signal of outputting the contents list display screen to the PND 93 through the communication line terminal T3 of the PIN cable 84, and also transmits image data of the contents list display screen to the PND 93 through the video terminal T5 of the PIN cable 84, and then the processing goes to next step SP127.

In step SP127, the control microcomputer 31 of the PND 93 switches the touch panel input unit 34 to the input mode corresponding to the contents list display screen of the portable AV player 94, and, when recognizing that AV contents which are desired to be reproduced are selected therefrom, transmits a status signal indicative of the selection result to the vehicle AV device 92 through the communication line terminal T3 of the PIN cable 84, and then the processing goes to next step SP128.

In step SP128, in accordance with the status signal received from the PND 93, the control microcomputer 21 of the vehicle AV device 92 makes the portable AV player 94 reproduce the selected AV contents, extends the reproduced sound to 4-ch and outputs the extended sound from the respective loudspeakers FL, FR, RL, and RR of the vehicle AV device 92, and transmits a status signal of the reproduction processing to the PND 93 through the communication line terminal T3 of the PIN cable 84, and also transmits reproduced image data of the AV contents to the PND 93 through the video terminal T5 of the PIN cable 84, and then the processing goes to next step SP129.

In step SP129, in accordance with the status signal of the reproduction processing received from the vehicle AV device 92, the control microcomputer 31 of the PND 93 makes the DSP unit 37 perform predetermined image processing with respect to the reproduced image data of the AV contents, and displays thus obtained reproduced image of the AV contents on the display 33, and then the processing goes to next step SP130.

In step SP130, when recognizing that the stop operation is performed through the touch panel input unit 34, the control microcomputer 31 of the PND 93 transmits a status signal of the reproduction stop to the vehicle AV device 92 through the communication line terminal T3 of the PIN cable 84, and then the processing goes to next step SP131.

In step SP131, in accordance with the status signal of the reproduction stop received from the PND 93, the control microcomputer 21 of the vehicle AV device 92 stops reproducing the AV contents by the portable AV player 94, transmits a status signal indicative of the reproduction stop to the PND 93 through the communication line terminal T3 of the PIN cable 84, and returns the sound output from the respective loudspeakers FL, FR, RL, and RR to the navigation sound guide, and then the processing goes to next step SP132, ending the processing of the vehicle AV device 92.

On the other hand, in step SP133, in accordance with the status signal of the AV contents reproduction stop received from the vehicle AV device 92, when recognizing that supplying the reproduced image data of the AV contents by the portable AV player 94 is ended from the vehicle AV device 92, the control microcomputer 31 of the PND 93 returns the contents to be displayed on the display 33 to a navigation image of the original navigation mode, and then the processing goes to next step SP134, ending the processing of the PND 93.

### (6-4) Operation and effect in sixth embodiment

In the above-described configuration, in the electronic device system 91, when the vehicle AV device 92 and the PND 93 are connected to each other through the PIN cable 84 so that mutual communication is possible, and the vehicle AV device 92 and the portable AV player 94 are connected by USB, in accordance with the status signal from the vehicle AV device 92, the mode can be switched to a touch panel mode under which the portable AV player 94 is operable from the PND 93 through the vehicle AV device 92.

Then, by transmitting the status signal of the contents list display to the vehicle AV device 92, and receiving the contents list display screen of the portable AV player 94 from the vehicle AV device 92, the control microcomputer 31 of the PND 93 can display the contents list of the portable AV player 94 on the display 33, and make the user select AV contents to be reproduced by the portable AV player 94 on the screen of the display 33.

At this time, in accordance with the status signal of the AV contents selection received from the PND 93, the control microcomputer 21 of the vehicle AV device 92 makes the portable AV player 94 reproduce the AV contents selected by the user, extends the reproduced sound to 4-ch and outputs the extended sound from the respective loudspeakers FL, FR, RL, and RR, and, by transmitting the reproduced image data of the AV contents reproduced by the portable AV player 94 to the PND 93, the reproduced image of the AV contents can be displayed on the display 33 of the PND 93.

That is, in the electronic device system 91, the portable AV player 94 which is connected to the vehicle AV device 92 by USB is operated externally from the PND 93 to reproduce AV contents desired by the user, and the reproduced sound can be extended to 4-ch to be output from the respective loudspeakers FL, FR, RL, and RR of the vehicle AV device 92, and the reproduced image can be displayed not on the small screen of the portable AV player 94 but on the large display 33 of the PND 93 in the enlarged state.

Under the above-described configuration, in the electronic device system 91, various status signals are sent and received between the vehicle AV device 92 and the PND 93 mutually, and, by making the respective functions cooperate with each other, a user interface which combines the mutual functions of the respective devices can be obtained without employing the mutual relationship of the master and slave, and, by outputting the reproduced sound of the AV contents reproduced by the portable AV player 94 from the respective loudspeakers FL, FR, RL, and RR of the vehicle AV device 92, and displaying reproduced image not on the screen of the portable AV player 94 but on the display 33 of the PND 93, the reproduced sound and reproduced image by the portable AV player 94 can be output instead by effectively utilizing the respective functions of the vehicle AV device 92 and PND 93.

Furthermore, in the electronic device system 91, while the vehicle AV device 92 is attached to be fixed to a predetermined position or the supply opening of an air conditioner arranged in the space inside the vehicle, or the lower part of an air conditioner operation panel, where the driver turns his eyes away from the driving visual line, the PND 93 is attached to an arbitrary position in the space inside the vehicle, where the driver does not turn his eyes away from the driving visual line largely, using an adhesive disc, and the vehicle AV device 92 and PND 93 are made to mutually cooperate with each other. Further, the contents list display screen of the portable AV player 94 is displayed through the display 33 of the PND 93. Accordingly, AV contents to be reproduced can be selected from among the contents list display screen. Thus, the AV contents held in the portable AV player 94 can be selected and reproduced without making the driver turn his eyes away from the driving visual line.

### (7) Other embodiments

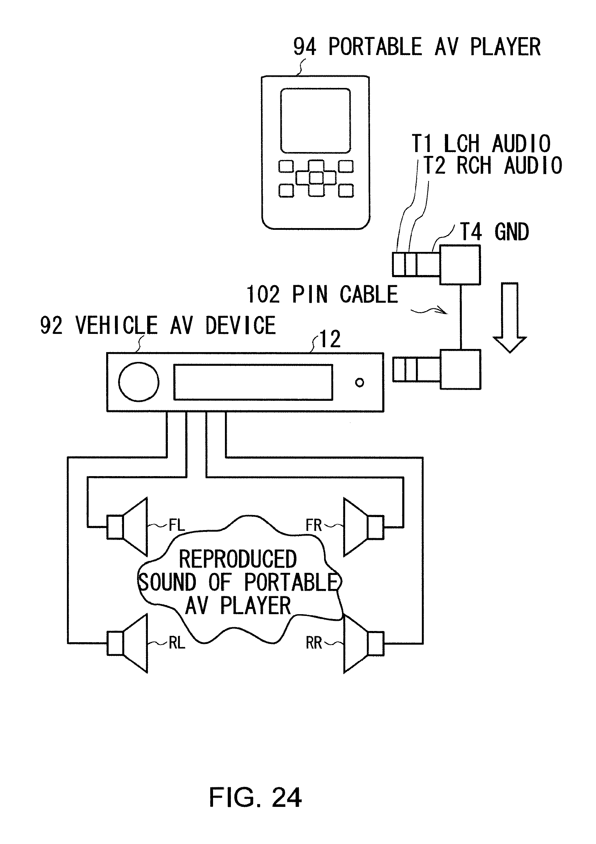

In the above-described first to sixth embodiments, the vehicle AV devices 2, 52, 62, 72, 82, 92 and PNDs 3, 53, 63, 73, 83, 93 are mutually connected by the PIN cable 4 or 84, and various status signals are sent and received therebetween mutually, and the respective functions are made to cooperate with each other, to which the present invention is not restricted. As shown in FIG. 24, in which parts or components similar to those in FIG. 21 are indicated with the same reference numerals, the portable AV player 94 and the vehicle AV device 92 may be connected by a tripolar PIN cable 102.

The PIN cable 102 has the left channel audio terminal T1, right channel audio terminal T2, and ground terminal T4. However, since the PIN cable 102 does not have the communication line terminal T3 which is provided in each of the PIN cables 4 and 84, status signals are unable to be sent and received mutually between the portable AV player 94 and the vehicle AV device 92.

On the other hand, the control microcomputer 21 of the vehicle AV device 92 takes in reproduced sound of AV contents reproduced by the portable AV player 94 through the PIN cable 102, extends the reproduced sound to 4-ch and outputs the extended sound from the respective loudspeakers FL, FR, RL, and RR through the DSP unit 27 and amplifier unit 30.

Furthermore, in the above-described first to sixth embodiments, the vehicle AV devices 2, 52, 62, 72, 82, 92 are used, to which the present invention is not restricted, and a home audio device may be employed.

Furthermore, in the above-described first to third embodiments, the radio communication link is established between the cellular phone 5 and the PNDs 3 and 63 using the communication processing unit 32 configured by Bluetooth, to which the present invention is not restricted. The radio communication link may be established between the cellular phone 5 and the PNDs 3 and 63 using a communication processing unit conforming to the wireless Local Area Network (LAN) standard such as the IEEE802.11b, IEEE802.11g, etc., or a communication processing unit conforming to the Ultra Wide Band (UWB).

Furthermore, in the above-described first to sixth embodiments, the vehicle AV devices 2, 52, 62, 72, 82, 92 initiate a processing program stored in the memory 25 previously, and the PNDs 3, 53, 63, 73, 83, 93 initiate a shared processing program stored in the memory 36 previously. Accordingly, status signals are sent and received therebetween mutually, and a user interface which combines the mutual functions and making the respective functions cooperate with each other is generated. The present invention is not limited to the embodiments. Status signals may be sent and received therebetween mutually, and a user interface which combines the mutual functions and makes the respective functions cooperate with each other may be generated in accordance with a processing program installed from a recording medium or a processing program downloaded from the Internet.

Furthermore, in the above-described embodiments, the vehicle AV devices 2, 52, 62, 72, 82, 92 and PNDs 3, 53, 63, 73, 83, 93 are mutually connected through a wire, or the PIN cable 4 or 84, to which the present invention is not restricted. They may be mutually connected wirelessly using a communication processing unit conforming to Bluetooth, wireless LAN standard such as the IEEE802.11b, IEEE802.11g, and UWB.

Furthermore, in the above-described embodiments, the vehicle AV devices 2, 52, 62, 72, 82, 92 as the first electronic device are configured by the PIN cables 4 and 84 as the first communication means and the control microcomputer 21 as the first recognition means and first processing means, and the PNDs 3, 53, 63, 73, 83, 93 as the second electronic device is configured by the PIN cables 4 and 84 as the second communication means and the control microcomputer 31 as the second recognition means and second processing means, to which the present invention is not restricted. The first electronic device and second electronic device may be configured by other various circuit configurations.

The electronic device system, electronic device, and processing method according to the embodiments of the present invention can be employed when connecting two kinds of electronic devices which are independent from each other.

It should be understood by those skilled in the art that various modifications, combinations, sub-combinations and alterations may occur depending on design requirements and other factors insofar as they are within the scope of the appended claims or the equivalents thereof.

## Claims

1. An electronic device system comprising a first electronic device and a second electronic device which are independent from each other, and which are connected through a wire or wirelessly, wherein
the first electronic device includes:
first communication means for performing mutual communication with the second electronic device;
first recognition means for recognizing a command sent from the second electronic device through the first communication means; and
first processing means for performing the processing of the second electronic device instead using the function of the first electronic device in accordance with the command recognized by the first recognition means, and
the second electronic device includes:
second communication means for performing mutual communication with the first electronic device;
second recognition means for recognizing a command sent from the first electronic device through the second communication means; and
second processing means for performing the processing of the first electronic device instead using the function of the second electronic device in accordance with the command recognized by the second recognition means.

2. The electronic device system according to claim 1, wherein the first electronic device includes
first function switching means which has a predetermined first input interface, and switches the function thereof so that the first input interface accepts the command with respect to the processing performed by the second processing means in the second electronic device, and
the second electronic device includes
second function switching means which has a predetermined second input interface, and switches the function thereof so that the second input interface accepts the command with respect to the processing performed by the first processing means in the first electronic device.

3. The electronic device system according to claim 1, wherein
the first electronic device is an audio device or an audio video device, and
the second electronic device is a portable navigation device or a cellular phone.

4. An electronic device comprising:
communication means for performing mutual communication with one other device through a wire or wirelessly;
recognition means for recognizing a command sent from the other device through the communication means; and
processing means for performing the processing of the other device instead using the function of itself in accordance with the command recognized by the recognition means.

5. The electronic device according to claim 4, wherein
the electronic device includes
function switching means which has a predetermined input interface, and switches the function thereof so that the input interface accepts the command with respect to the processing of the other device.

6. A processing method comprising:
a communication step of performing mutual communication with one other device using predetermined communication means through a wire or wirelessly;
a command recognition step of recognizing a command sent from the other device in the communication step using predetermined recognition means; and
a stead processing step of performing the processing of the other device instead using the function of itself in accordance with the command recognized in the command recognition step.

7. An electronic device system comprising a first electronic device and a second electronic device which are independent from each other, and which are connected through a wire or wirelessly, wherein
the first electronic device includes:
a first communication section that performs mutual communication with the second electronic device;
a first recognition section that recognizes a command sent from the second electronic device through the first communication section; and
a first processing section that performs the processing of the second electronic device instead using the function of the first electronic device in accordance with the command recognized by the first recognition section, and
the second electronic device includes:
a second communication section that performs mutual communication with the first electronic device;
a second recognition section that recognizes a command sent from the first electronic device through the second communication section; and
a second processing section that performs the processing of the first electronic device instead using the function of the second electronic device in accordance with the command recognized by the second recognition section.

8. An electronic device comprising:
a communication section that performs mutual communication with one other device through a wire or wirelessly;
a recognition section that recognizes a command sent from the other device through the communication section; and
a processing section that performs the processing of the other device instead using the function of itself in accordance with the command recognized by the recognition section.
